# EUROPEAN PATENT APPLICATION

(11) **EP 4 712 357 A1**
(43) Date of publication of application: **18.03.2026**
(21) Application number: 24807465.0
(22) Date of filing: 10.05.2024
(51) Int. Cl.: H04B 7/06, H04W 72/231, H04W 72/232, H04W 72/21, H04W 52/02

(54) **APPARATUS AND METHOD FOR CONTROLLING STATE OF SUB-CONFIGURATIONS OF CHANNEL STATE INFORMATION REPORT CONFIGURATION IN WIRELESS COMMUNICATION SYSTEM**

(30) Priority: 12.05.2023 KR 20230061684
(71) Applicant: LG Electronics Inc., Yeongdeungpo-gu Seoul 07336 (KR)
(72) Inventor: KIM, Seonwook, Seoul 06772 (KR); LEE, Youngdae, Seoul 06772 (KR); YANG, Suckchel, Seoul 06772 (KR); MYUNG, Sechang, Seoul 06772 (KR); PARK, Haewook, Seoul 06772 (KR)
(74) Representative: Mooser, Sebastian Thomas
(86) International application number: PCT/KR2024/006357
(87) International publication number: WO 2024/237590

(57) **Abstract**

The objective of the present disclosure is to control the state of sub-configurations of a channel state information (CSI) report configuration in a wireless communication system. This method, performed by a terminal, may comprise the steps of: receiving configuration information for at least one CSI report including a plurality of sub-configurations; receiving a message including information related to activation for each of the plurality of sub-configurations; generating at least one CSI on the basis of at least one activated sub-configuration from among the plurality of sub-configurations; and transmitting a CSI report including the at least one CSI.

## Description

### TECHNICAL FIELD

The following description relates to a wireless communication system, and to a device and method for controlling the status of sub-configurations of channel state information (CSI) reporting configuration in a wireless communication system.

### BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### DISCLOSURE

### TECHNICAL PROBLEM

The present disclosure relates to a device and a method for feeding back channel state information (CSI) in consideration of an energy saving operation of a base station in a wireless communication system.

The present disclosure relates to a device and a method for controlling an amount of CSI reporting in consideration of an energy saving operation of a base station in a wireless communication system.

The present disclosure relates to a device and a method for reporting CSI based on a sub-configuration included in a CSI report configuration in a wireless communication system.

The present disclosure relates to a device and a method for controlling states of sub-configurations for CSI reporting in a wireless communication system.

The present disclosure relates to a device and a method for determining whether sub-configurations for CSI reporting are activated in a wireless communication system.

The present disclosure relates to a device and a method for signaling whether sub-configurations for CSI reporting are activated in a wireless communication system.

The present disclosure relates to a device and a method for signaling whether CSI report configurations are activated and whether sub-configurations of each CSI report configuration are activated in a wireless communication system.

The present disclosure relates to a device and a method for providing a rule for determining whether sub-configurations are activated based on whether CSI report configurations are activated in a wireless communication system.

The present disclosure relates to a device and a method for signaling whether information related to activation of sub-configurations for CSI reporting is included in a wireless communication system.

The present disclosure relates to a device and a method for controlling states of sub-configurations based on a relationship between sub-configurations in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

### TECHNICAL SOLUTION

In one example of the present disclosure, a method performed by a UE in a wireless communication system may comprise: receiving configuration information for at least one channel state information (CSI) report including a plurality of sub-configurations; receiving a message including information related to activation for each of the plurality of sub-configurations; generating at least one CSI based on at least one sub-configuration which is activated among the plurality of sub-configurations; and transmitting CSI report including the at least one CSI. Here, the at least one CSI report configuration may include first CSI report configuration and second CSI report configuration, and the message may include first field set indicating whether sub-configuration included in the first CSI report configuration is activated, and second field set indicating whether sub-configuration included in the second CSI report configuration is activated.

In one example of the present disclosure, a method performed by a UE in a wireless communication system may comprise a transceiver and a processor connected to the transceiver, wherein the processor may be configured to: receive configuration information for at least one channel state information (CSI) report including a plurality of sub-configurations; receive a message including information related to activation for each of the plurality of sub-configurations; generate at least one CSI based on at least one sub-configuration which is activated among the plurality of sub-configurations; and transmit CSI report including the at least one CSI. Here, the at least one CSI report configuration may include first CSI report configuration and second CSI report configuration, and the message may include first field set indicating whether sub-configuration included in the first CSI report configuration is activated, and second field set indicating whether sub-configuration included in the second CSI report configuration is activated.

In one example of the present disclosure, a communication device may comprise at least one processor, and at least one computer memory connected to the at least one processor and storing instructions that direct operations when executed by the at least one processor, the operations comprising: receiving configuration information for at least one channel state information (CSI) report including a plurality of sub-configurations; receiving a message including information related to activation for each of the plurality of sub-configurations; generating at least one CSI based on at least one sub-configuration which is activated among the plurality of sub-configurations; and transmitting CSI report including the at least one CSI. Here, the at least one CSI report configuration may include first CSI report configuration and second CSI report configuration, and the message may include first field set indicating whether sub-configuration included in the first CSI report configuration is activated, and second field set indicating whether sub-configuration included in the second CSI report configuration is activated.

In one example of the present disclosure, a non-transitory computer-readable medium storing at least one instruction may comprise the at least one instruction executable by a processor, wherein the at least one instruction causing a device, the processor, to: receive configuration information for at least one channel state information (CSI) report including a plurality of sub-configurations; receive a message including information related to activation for each of the plurality of sub-configurations; generate at least one CSI based on at least one sub-configuration which is activated among the plurality of sub-configurations; and transmit CSI report including the at least one CSI. Here, the at least one CSI report configuration may include first CSI report configuration and second CSI report configuration, and the message may include first field set indicating whether sub-configuration included in the first CSI report configuration is activated, and second field set indicating whether sub-configuration included in the second CSI report configuration is activated.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

### ADVANTAGEOUS EFFECTS

The embodiments based on the present disclosure may have the following effects.

According to the present disclosure, in CSI reporting based on sub-configurations of channel state information (CSI) reporting configurations, the overhead of CSI reporting by a UE may be reduced.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

FIG. 1 illustrates an example of a structure of a wireless communication system to which the present disclosure may be applied.
FIG. 2 illustrates an example of a wireless device applicable to the present disclosure.
FIG. 3 illustrates physical channels used in a wireless communication system, to which the present disclosure may be applied, and a general signal transmission and reception method using the physical channels.
FIG. 4 illustrates an example of beams applicable to the present disclosure.
FIG. 5 illustrates an example of a downlink (DL) beam management (BM) procedure using a synchronization signal block (SSB) applicable to the present disclosure.
FIG. 6 illustrates an example of a DL BM procedure using a channel state information (CSI) reference signal (RS) applicable to the present disclosure.
FIG. 7 illustrates an example of a receive beam determination procedure of a UE applicable to the present disclosure.
FIG. 8 illustrates an example of a transmit beam determination procedure of a base station applicable to the present disclosure.
FIG. 9 illustrates an example of resource allocation in a time and frequency domain applicable to the present disclosure.
FIG. 10 illustrates an example of beam sweeping for uplink (UL) BM using a sounding reference signal (SRS) applicable to the present disclosure.
FIG. 11 illustrates an example of a UL BM procedure using an SRS applicable to the present disclosure.
FIG. 12 illustrates an example of an operation procedure of a base station supporting a network energy saving (NES) technology applicable to the present disclosure.
FIG. 13 illustrates an example of a procedure for CSI measurement and reporting applicable to the present disclosure.
FIG. 14a to FIG. 14c illustrate examples of states of antenna elements according to an embodiment of the present disclosure.
FIG. 15 illustrates an example of a procedure for indicating activation per sub-configuration of a CSI report configuration according to an embodiment of the present disclosure.
FIG. 16 illustrates an example of a procedure for checking activation per sub-configuration of a CSI report configuration according to an embodiment of the present disclosure.
FIGS. 17a to 17f illustrate examples of a structure of MAC CE for controlling CSI reporting according to an embodiment of the present disclosure.
FIG. 18 illustrates an example of a procedure for controlling a state of a sub-configuration based on linkage between sub-configurations according to an embodiment of the present disclosure.
FIG. 19 illustrates an example of a procedure for transmitting a CSI report based on sub-configurations according to an embodiment of the present disclosure.

### MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

### Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

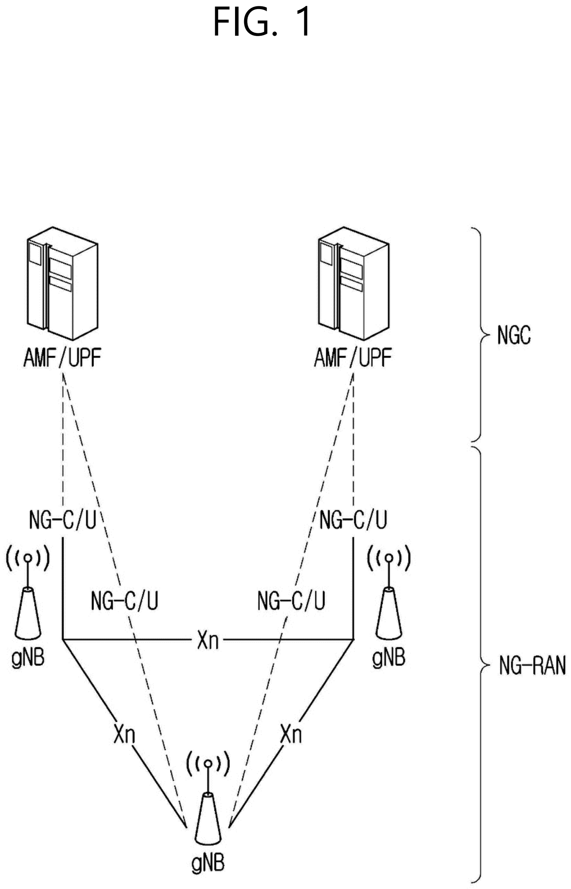

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

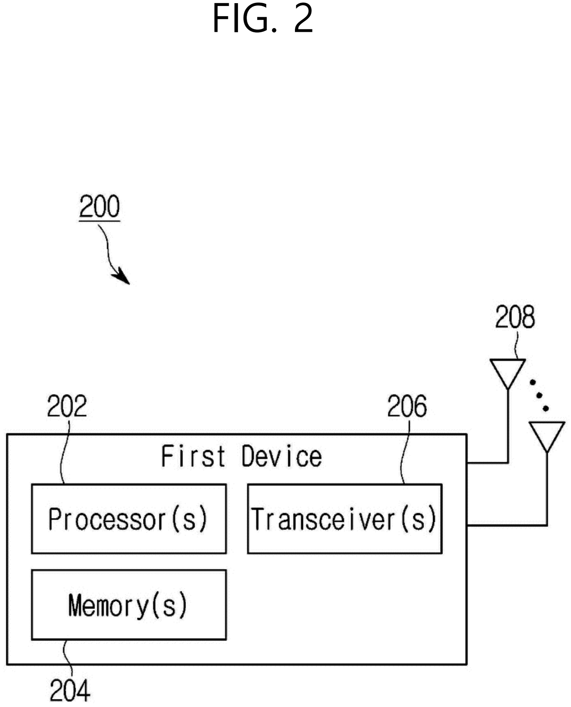

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

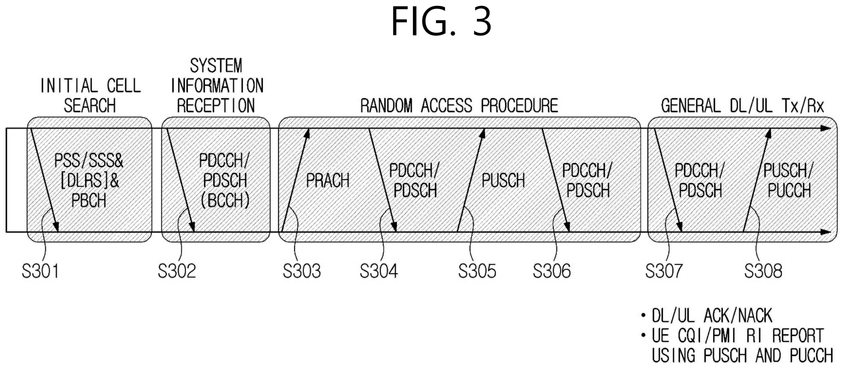

FIG. 3 exemplifies physical channels used in a wireless communication system, to which the present disclosure may be applied, and a general signal transmission and reception method using the same.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S301). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S302).

Meanwhile, in case the terminal accesses to the base station for the first time or does not have a radio resource for signal transmission, the terminal may perform a random access procedure (RACH) for the base station (S303 to S306). To this end, the terminal may transmit a specific sequence as a preamble through a physical random access channel (PRACH) (S303 and S305) and receive a response message for the preamble through a PDCCH and a corresponding PDSCH (S304 and S306). In the case of a contention-based RACH, a contention resolution procedure may be additionally performed.

The terminal, which has performed the above-described procedure, may subsequentially perform PDCCH/PDSCH reception (S307) and physical uplink shared channel (PUSCH)/physical uplink control channel (PUCCH) transmission (S308) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

### Beam Management (BM)

The BM procedure is an L1 (layer 1) / L2 (layer 2) procedure for obtaining and maintaining a set of base station (e.g., gNB, TRP, etc.) and/or terminal (e.g., UE) beams that may be used for downlink (DL) and uplink (UL) transmission/reception, and may include the following procedures and terms.
- Beam measurement: The operation in which a base station or a UE measures characteristics of a received beam forming signal.
- Beam determination: The operation in which a base station or a UE selects its transmit beam (Tx beam) / receive beam (Rx beam).
- Beam sweeping: The operation in which a transmit and/or receive beam is used to cover a spatial domain for a certain time interval in a predetermined manner.
- Beam report: The operation in which a UE reports information of a beamformed signal based on beam measurement.

The BM procedure may be classified into (1) a DL BM procedure using a synchronization signal (SS) / physical broadcast channel (PBCH) block or a CSI-RS, and (2) a UL BM procedure using a sounding reference signal (SRS).

In addition, each BM procedure may include Tx beam sweeping for determining a Tx beam and Rx beam sweeping for determining an Rx beam.

### <DL BM>

The DL BM procedure may include (1) transmission of beamformed DL reference signals (RSs) (e.g., CSI-RS or SS block (SSB)) of a base station, and (2) beam reporting of a UE.

Here, the beam reporting may include a preferred DL RS identifier (ID)(s) and a corresponding L1-reference signal received power (L1-RSRP).

The DL RS ID may be an SSB resource indicator (SSBRI) or a CSI-RS resource indicator (CRI).

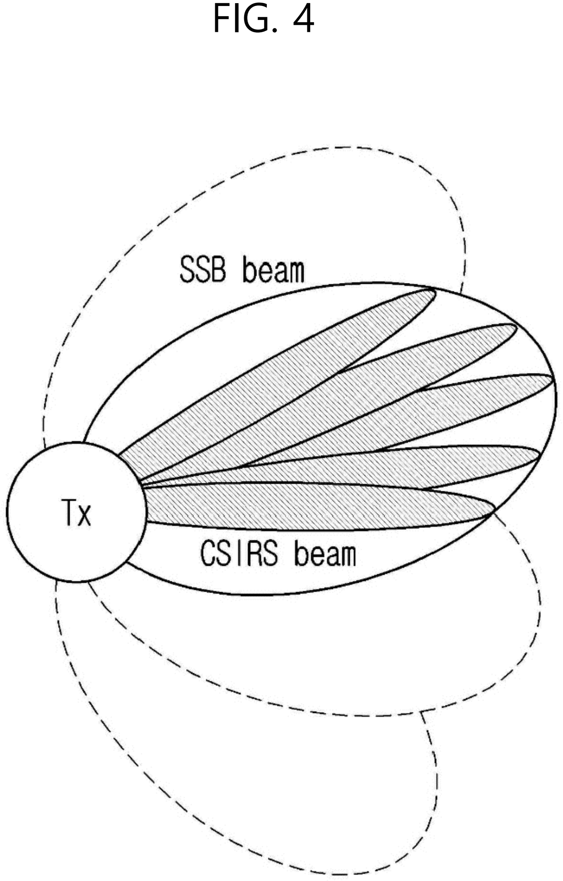

As shown in FIG. 4, an SSB beam and a CSI-RS beam may be used for beam measurement. The measurement metric is L1-RSRP per resource/block. The SSB may be used for coarse beam measurement, and a CSI-RS may be used for fine beam measurement. The SSB may be used for both Tx beam sweeping and Rx beam sweeping.

The Rx beam sweeping using an SSB may be performed across a plurality of SSB bursts while the UE changes an Rx beam for the same SSBRI. Here, one SS burst includes one or more SSBs, and one SS burst set includes one or more SS bursts.

### <DL BM using SSB>

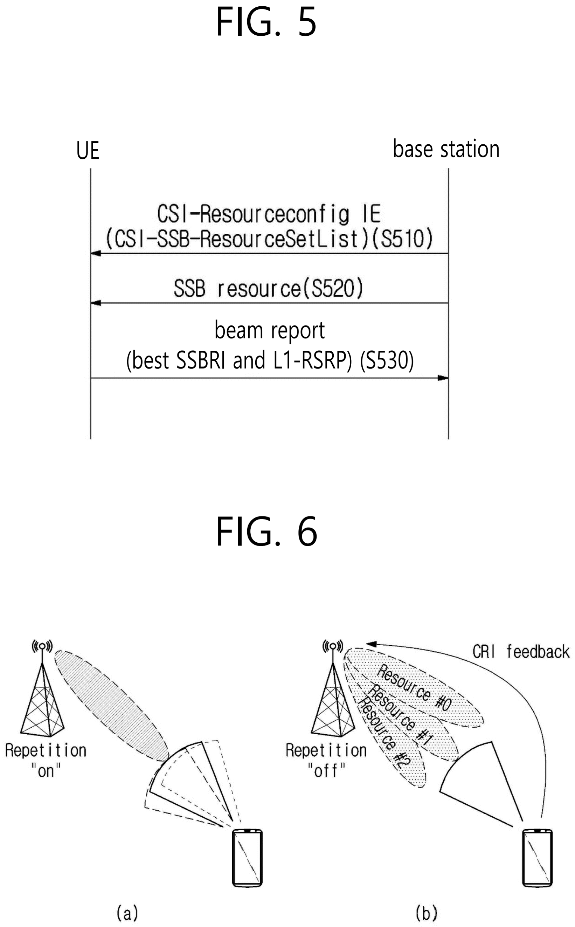

FIG. 5 is a flowchart illustrating an example of the DL BM procedure using SSB.

Configuration of a beam report using an SSB is performed upon
- The UE receives, from the base station, CSI-ResourceConfig IE including CSI-SSB-ResourceSetList which includes SSB resources used for BM (S410).

Table 1 shows an example of CSI-ResourceConfig IE, and like CSI-ResourceConfig IE in Table 1, BM configuration using an SSB is not defined additionally, and the SSB is set as a CSI-RS resource.

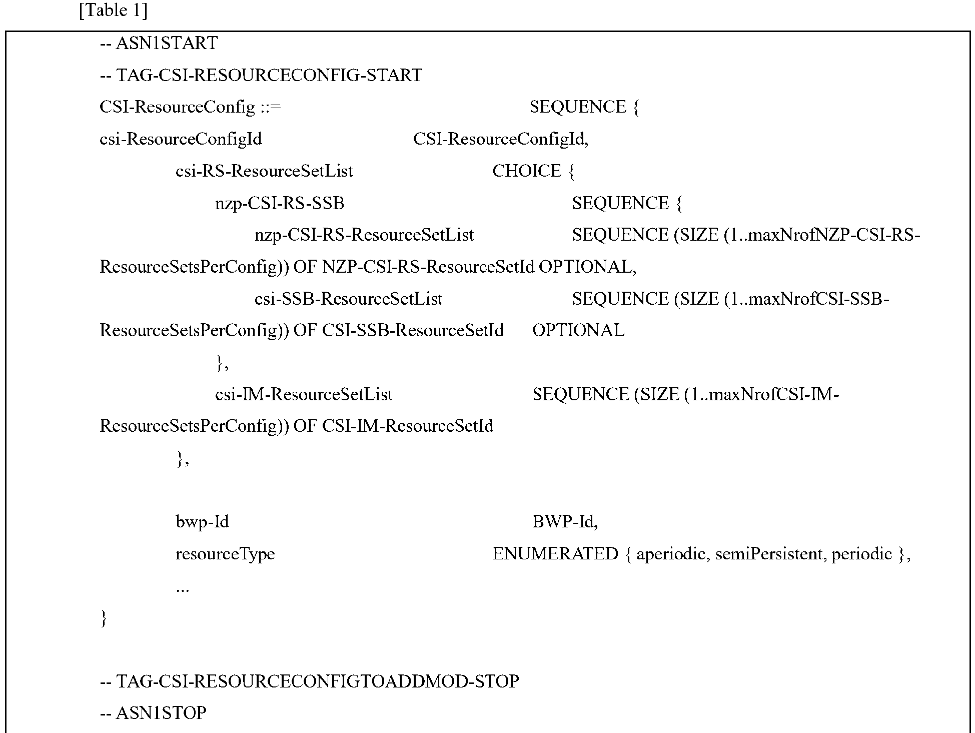

In Table 1, the parameter csi-SSB-ResourceSetList indicates a list of SSB resources used for beam management and reports in a single resource set. Herein, the SSB resource set may be configured as {SSBx1, SSBx2, SSBx3, SSBx4, ...}. An SSB index may be defined from 0 to 63. - The UE receives the SSB resources from the base station based on the CSI-SSB-ResourceSetList (S420). - When CSI-RS reportConfig for SSBRI and L1-RSRP reporting is configured, the UE (beam) reports the best SSBRI and L1-RSRP corresponding thereto to the base station (S430).

That is, when reportQuantity in the CSI-RS reportConfig IE is configured as ssb-Index-RSRP, the UE reports the best SSBRI and L1-RSRP corresponding thereto to the base station.

Then, when a CSI-RS resource is configured in an OFDM symbol(s) identical to an SSB (SS/PBCH Block) and QCL-TypeD is applicable, the UE may assume that the CSI-RS and the SSB are quasi co-located with each other in terms of 'QCL-TypeD'.

Herein, the QCL Type D may mean that antenna ports are QCL with each other in terms of the spatial Rx parameter. When the UE receives a plurality of DL antenna ports which are in a QCL Type D relationship with each other, it is possible to apply the same Rx beam. In addition, the UE does not expect that a CSI-RS is configured in a RE overlapping with a RE of the SSB.

### <DL BM using CSI-RS>

Regarding the use of a CSI-RS, i) when a repetition parameter is configured for a specific CSI-RS resource set and TRS_info is not configured, the CSI-RS is used for beam management. ii) when the repetition parameter is not configured and TRS_info is configured, the CSI-RS is used for a tracking reference signal (TRS). iii) when the repetition parameter is not configured and TRS_info is not configured, the CSI-RS is used for CSI acquisition.

This repetition parameter may be set only for CSI-RS resource sets that are associated with CSI-ReportConfig having a report of L1 RSRP or 'No Report or None'.

If the UE receives CSI-ReportConfig in which reportQuantity is set to 'cri-RSRP' or 'none' and, CSI-ResourceConfig for channel measurement (higher layer parameter 'resourcesForChannelMeasurement') does not include higher layer parameter 'trs-Info' but includes NZP-CSI-RS-ResourceSet which is set to higher layer parameter 'repetition' (repetition=ON), the UE may be composed of a port of the same number (1-port or 2-port), which includes higher layer parameter 'nrofPorts' for all CSI-RS resources in the NZP-CSI-RS-ResourceSet.

When (higher layer parameter) repetition is set to 'ON', it is related to an Rx beam sweeping procedure of a UE. In this case, when the UE is configured with an NZP-CSI-RS-ResourceSet, the UE may assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through the same Tx beam. Here, at least one CSI-RS resource in the NZP-CSI-RS-ResourceSet may be transmitted in different OFDM symbols. In addition, the UE is not expected to receive different periodicities in periodicityAndOffset among all CSI-RS resources in the NZP-CSI-RS-ResourceSet.

In contrast, when repetition is set to 'OFF', it is related to a Tx beam sweeping procedure of a base station. In this case, when repetition is set to 'OFF', the UE does not assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through different Tx beams.

FIG. 6 is a diagram illustrating an example of a DL BM procedure using a CSI-RS. FIG. 6(a) shows an Rx beam determination (or refinement) procedure of a UE, and FIG. 6(b) shows a Tx beam determination procedure of a base station. In addition, FIG. 6(a) shows the case where the repetition parameter is set to 'ON', and FIG. 6(b) shows the case where the repetition parameter is set as 'OFF'.

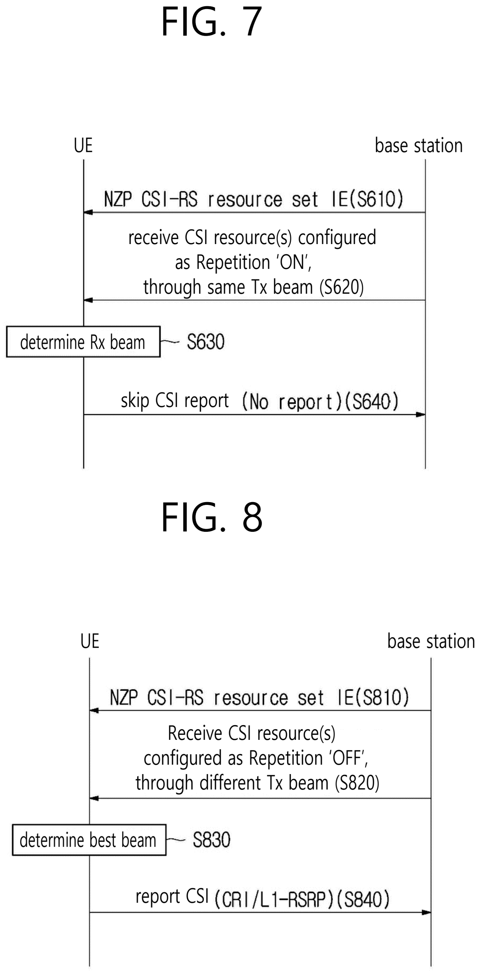

With reference to FIG. 6(a) and FIG. 7, the Rx beam determination procedure of the UE will be described.

FIG. 7 is a flowchart illustrating an example of the Rx beam determination procedure of the UE.
- The UE receives, from the base station, NZP CSI-RS resource set IE including higher layer parameter repetition through RRC signaling (S610). The parameter repetition is set to 'ON'.
- The UE repeatedly receives a resource(s) in a CSI-RS resource set, in which repetition is set to 'ON', from a different OFDM symbol through the same Tx beam (or a DL spatial domain transmission filter) (S620).
- In doing so, the UE determines its own Rx beam (S630).
- The UE may omit a CSI report or may transmit a CSI report including CRI/L1-RSRP to the base station (S640).

That is, when the repetition is set to 'ON', the UE may omit a CSI report or may report ID information (CRI) of a beam pair-related preferred beam and a quality value thereof (L1-RSRP).

With reference to FIG. 6(b) and FIG. 8, the Tx beam determination procedure of the base station will be described.

FIG. 8 is a flowchart illustrating an example of the Tx beam determination procedure of the base station.
- the UE receives, from the base station, NZP CSI-RS resource set IE including higher layer parameter repetition through RRC signaling (S810). Here, the repetition parameter is set to 'OFF' and relates to a Tx beam sweeping procedure of the base station.
- the UE receives resources in a CSI-RS resource set, in which repetition is set to 'OFF', via a different Tx beam (a DL spatial domain transmission filter) (S820).
- the UE selects (or determines) the best beam (S830), and
- the UE reports ID and quality information (e.g., L1-RSRP) of the selected beam to the base station (S840). In this case, reportQuantity of CSI report Config may be configured as 'CRI+L1-RSRP'.

That is, when the CSI-RS is transmitted for BM, the UE reports CSI and L1-RSRP corresponding thereto to the base station.

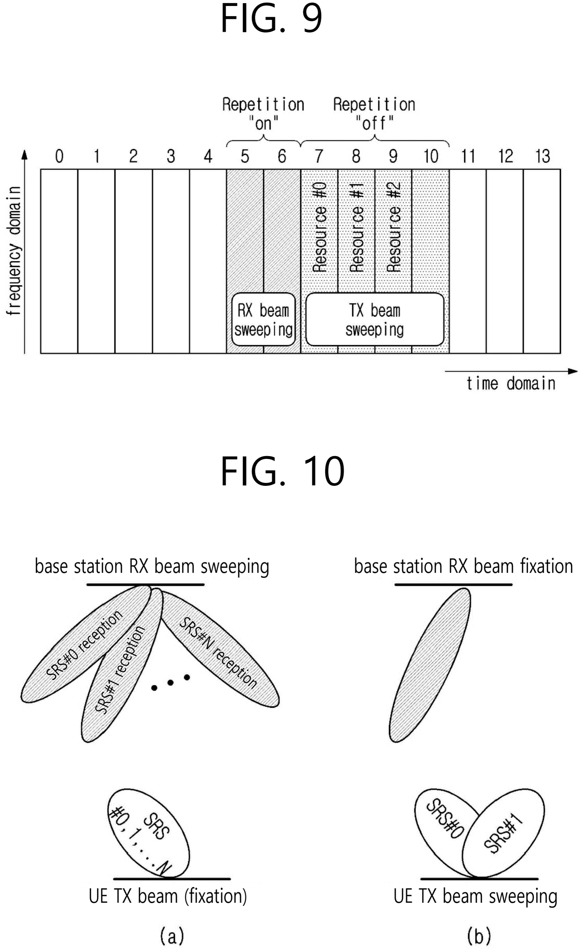

FIG. 9 is a diagram illustrating an example of resource allocation in time and frequency domains, which is related to operation of FIG. 6.

That is, when repetition is set to 'ON' for a CSI-RS resource set, a plurality of CSI-RS resources is repeatedly used via the same Tx beam, and, when repetition is set to 'OFF' for the CSI-RS resource set, different CSI-RS resources are transmitted via different Tx beams.

### <DL BM-Related Beam Indication>

A UE may receive RRC configuration of a list of a maximum M number of candidate Transmission Configuration Indication (TCI) states at least for the purpose of Quasi Co-location (CQL) indication. Herein, M may be 64.

Each TCI state may be configured as one RS set. ID of each DL RS for a spatial QCL at least in an RS set (QCL Type D) may refer to at least one of DL RS types such as an SSB, a P-CSI RS, a SP-CSI RS, or a A-CSI RS.

Initialization/update of ID of DL RS(s) in an RS set used at least for a spatial QCL purpose may be performed at least via explicit signaling.

Table 2 shows an example of TCI-State IE. The TCI-State IE is associated with a quasi co-location (QCL) type corresponding to one or two DL reference signals (RSs).

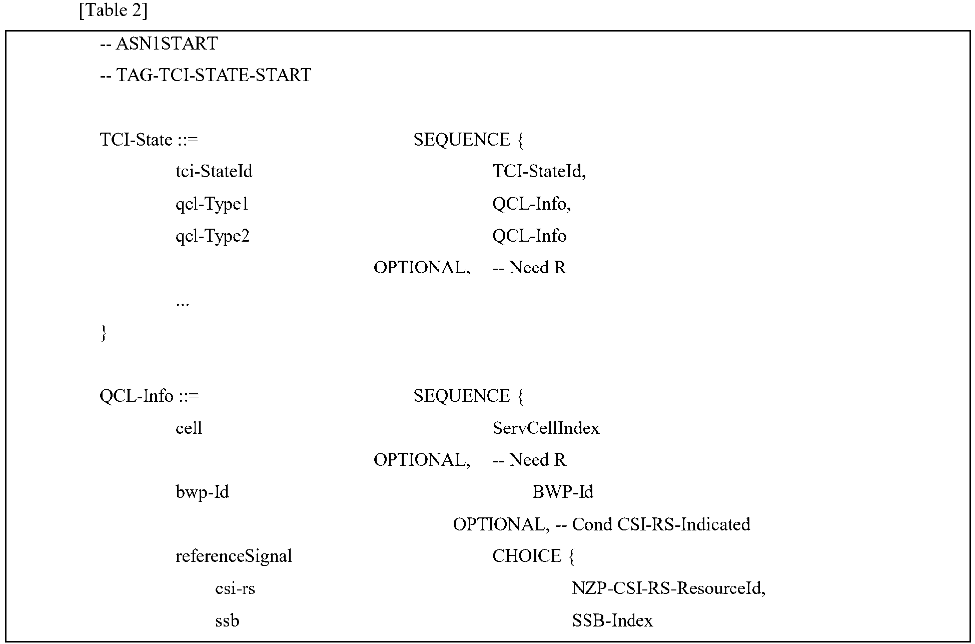

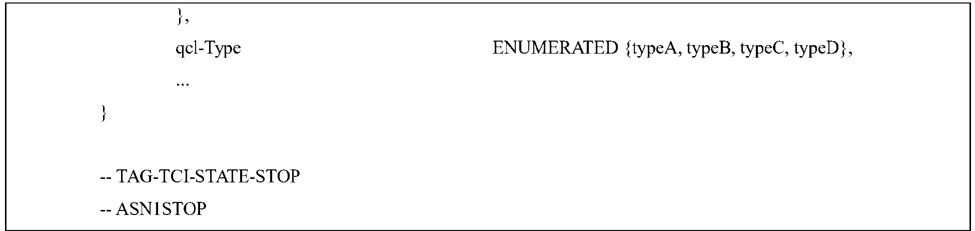

In Table 2, the bwp-id parameter indicates a BL BWP where a RS is located, and the cell parameter indicates a carrier where an RS is located, and the reference signal parameter indicates a reference antenna port(s) which is a quasi colocation source for a corresponding target antenna port(s). The target antenna port(s) may be an example of a CSI-RS, a PDCCH DMRS, or a PDSCH DMRS. For example, in order to indicate QCL reference information for a NZP CSI-RS, TCI state ID may be indicated in each CORESET configuration. In another example, in order to indicate QCL reference information for a PDSCH DMRS antenna port(s), DCI state ID may be indicated via DCI.

### <QCL (Quasi-Co Location)>

An antenna port is defined such that a channel over which a symbol on one antenna port is carried can be inferred from another channel over which a symbol on another antenna port is carried. When properties of the channel over which a symbol on one antenna port is carried can be inferred from a channel over which a symbol on another antenna port is carried, the two antenna ports may be in a quasi co-located or quasi co-location (QC/QCL) relationship.

Herein, the channel properties may include at least one of delay spread, Doppler spread, Doppler shift, average gain, and average delay. Herein, the spatial Rx parameter indicates a spatial (reception) channel property parameter such as an angle of arrival.

In order to decode a PDSCH according to a PDCCH which is detected and has DCI intended for a corresponding UE and a given serving cell, a list of M number of TCI-state configurations in higher layer parameter PDSCH-Config may be set. The number M depends on UE capability.

Each TCI-State includes a parameter for setting a quasi co-location relationship between one or two DL reference signals and a DMRS port of the PDSCH.

The quasi co-location relationship may be configured as higher layer parameter qcl-Type 1 for the first DL RS and qcl-Type 2 (when set) for the second DL RS. If there are the two DL RSs, a QCL type is not the same, regardless of whether the two DL RSs have the same reference or different references.

A quasi co-location type corresponding to each DL RS is given by higher layer parameter qcl-Type in QCL-Info, and may take one of the following forms.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, in the case where a target antenna port is a specific NZP CSI-RS, corresponding NZP CSI-RS antenna ports may be indicated/configured to be QCL with a specific TRS in terms of QCL-Type A or with a specific SSB in terms of QCL-Type D. The UE indicated/configured as above may receive a corresponding NZP CSI-RS using a measured Doppler and a delay value, and may apply a Rx beam, which is used in receiving the QCL-TypeD SSB, to receive the corresponding NZP CSI-RS.

The UE receives an activation command used to map eight TCI states to codepoints of a DCI field 'Transmission Configuration Indication'.

### <UL BM>

In the UL BM, beam reciprocity (or beam correspondence) between a Tx beam and an Rx beam may or may not be established according to terminal implementation. If reciprocity between a Tx beam and an Rx beam is established in both a base station and a terminal, a UL beam pair may be aligned through a DL beam pair. However, when reciprocity between a Tx beam and an Rx beam is not established in either of a base station and a terminal, a UL beam pair determination process is required separately from a DL beam pair determination.

In addition, even when both the base station and the UE maintain beam correspondence, the base station may use a UL BM procedure for DL Tx beam determination without the UE requesting reporting of a preferred beam.

UL BM may be performed through beamformed UL SRS transmission, and whether UL BM of an SRS resource set is applied is configured by (higher layer parameter) usage. When usage is configured to 'BeamManagement (BM)', only one SRS resource may be transmitted in each of a plurality of SRS resource sets at a given time instant.

A terminal may be configured with one or more Sounding Reference Symbol (SRS) resource sets configured by the (higher layer parameter) SRS-ResourceSet (through higher layer signaling, RRC signaling, etc.). For each SRS resource set, a UE may be configured with K≥ 1 SRS resources (higher layer parameter SRS-resource). Here, K is a natural number, and a maximum value of K is indicated by SRS_capability.

Like DL BM, a UL BM procedure may also be divided into Tx beam sweeping of a terminal and Rx beam sweeping of a base station.

FIG. 10 is a diagram illustrating an example of the UL BM procedure using an SRS. FIG. 10(a) shows an RX beam determination procedure by a base station, and FIG. 10(b) shows a Tx beam determination procedure by a UE.

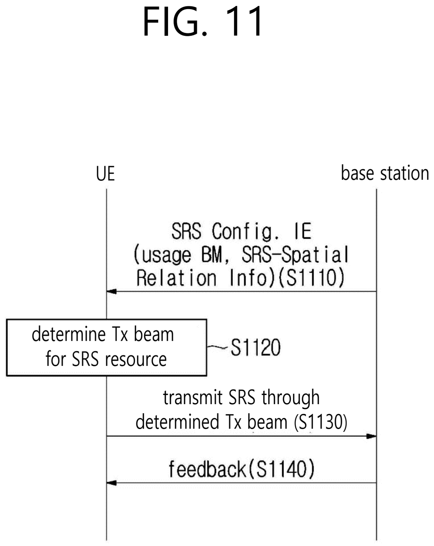

FIG. 11 is a flowchart illustrating a UL BM procedure using an SRS.
- A terminal receives RRC signaling (e.g., SRS-Config 1E) including a usage parameter (higher layer parameter) configured with 'beam management' from a base station (S1110).

Table 3 shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

A network may trigger transmission of an SRS resource set using configured aperiodicSRS-ResourceTrigger (L1 DCI).

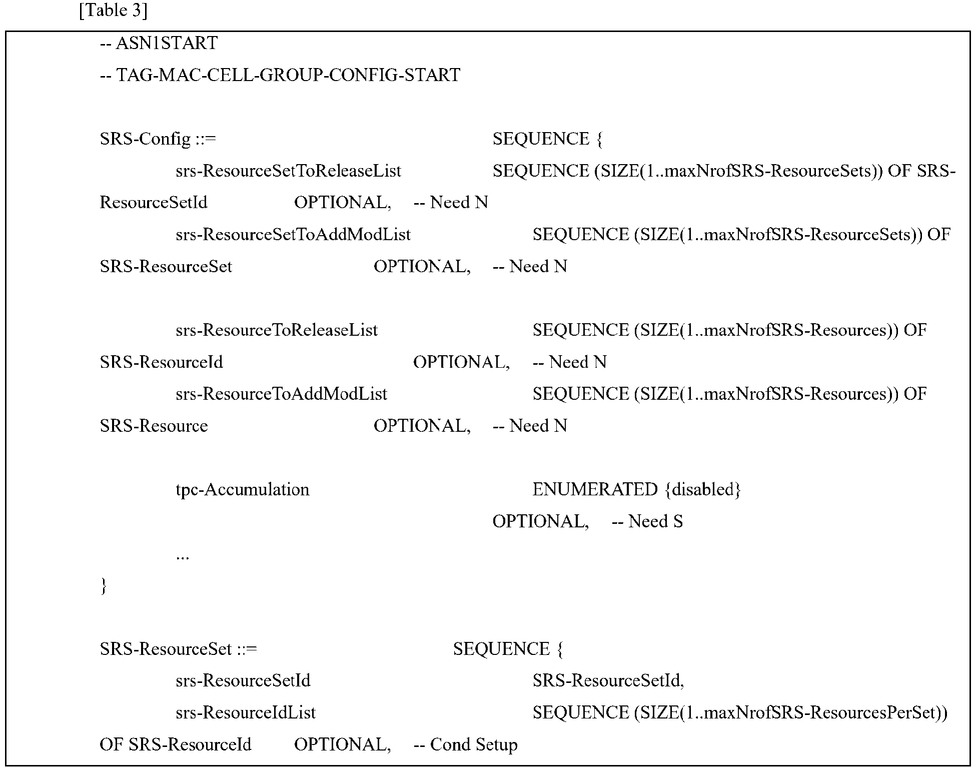

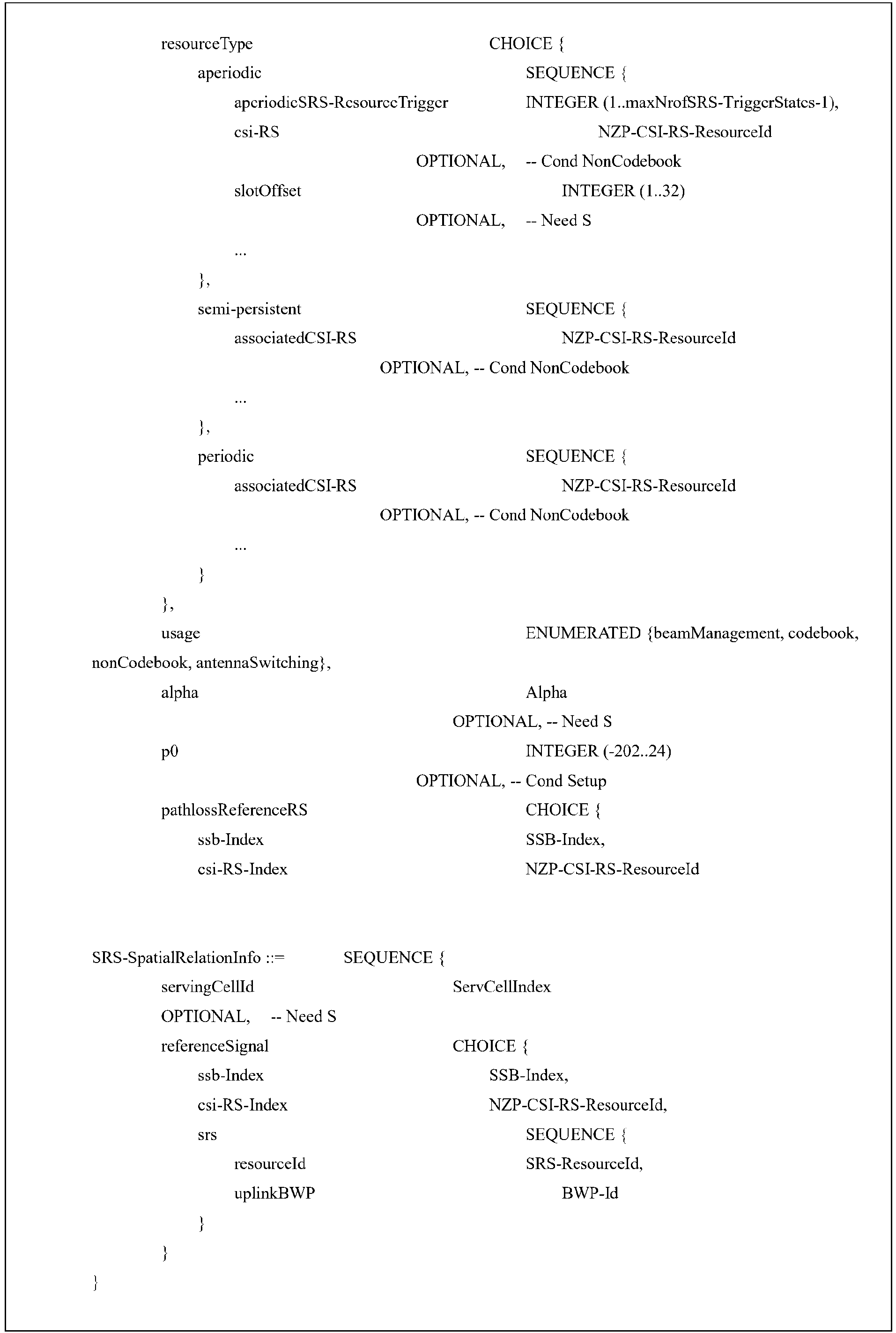

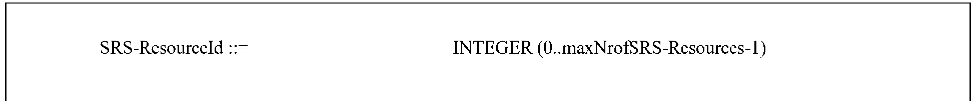

In Table 3, usage represents a higher layer parameter indicating whether an SRS resource set is used for beam management, codebook-based or non-codebook-based transmission. The usage parameter corresponds to an L1 parameter 'SRS-SetUse'. 'spatialRelationInfo' is a parameter indicating a configuration of a spatial relation between a reference RS and a target SRS. Here, a reference RS may be an SSB, a CSI-RS, or an SRS corresponding to the L1 parameter 'SRS-SpatialRelationInfo'. The usage configured for each SRS resource set. - the terminal determines a Tx beam for an SRS resource to be transmitted based on the SRS-SpatialRelation Info included in the SRS-Config IE (S1120). Here, SRS-SpatialRelation Info is configured for each SRS resource, and indicates whether to apply the same beam as a beam used in an SSB, a CSI-RS, or an SRS for each SRS resource. In addition, SRS-SpatialRelationInfo may or may not be configured in each SRS resource. - If the SRS-SpatialRelationInfo is configured in an SRS resource, the same beam as a beam used in an SSB, a CSI-RS or an SRS is applied and transmitted. However, if the SRS-SpatialRelationInfo is not configured in an SRS resource, the terminal arbitrarily determines a Tx beam and transmits an SRS through the determined Tx beam (S1130).

More specifically, for P-SRS in which 'SRS-ResourceConfigType' is configured to 'periodic':
i) When SRS-SpatialRelationInfo is configured with 'SSB/PBCH', a UE transmits a corresponding SRS resource by applying the same spatial domain transmission filter (or generated from a corresponding filter) as a spatial domain reception (Rx) filter used for reception of an SSB/PBCH; or
ii) When SRS-SpatialRelationInfo is configured with 'CSI-RS', a UE transmits an SRS resource by applying the same spatial domain transmission filter used for reception of a periodic CSI-RS or a semi-persistent (SP) CSI-RS; or
iii) When SRS-SpatialRelationInfo is configured with 'SRS', a UE transmits a corresponding SRS resource by applying the same spatial domain transmission filter used for transmission of a periodic SRS.

Similar to the above, even when 'SRS-ResourceConfigType' is configured with 'semi-persistent (SP)-SRS' or 'aperiodic (AP)-SRS', beam determination and transmission operation may be applied.
- Additionally, a terminal may or may not receive feedback on an SRS from a base station as in the following three cases (S1140).
   i) When Spatial Relation Info is configured for all SRS resources in an SRS resource set, a terminal transmits an SRS in a beam indicated by a base station. For example, when Spatial Relation Info all indicate the same an SSB, a CRI, or an SRI, a terminal repeatedly transmits an SRS in the same beam. This case corresponds to FIG. G(a), for the purpose of a base station selecting an Rx beam.
   ii) Spatial Relation Info may not be configured for all SRS resources in an SRS resource set. In this case, a terminal may freely transmit while changing an SRS beam. That is, this case corresponds to FIG. G(b), for the purpose of a terminal sweeping a Tx beam.
   iii) Spatial Relation Info may be configured only for some SRS resources in an SRS resource set. In this case, for the configured SRS resource, an SRS is transmitted with the indicated beam, and for the SRS resource for which Spatial Relation Info is not configured, a terminal may arbitrarily apply a Tx beam and transmit it.

### Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

**[Table 4]**

| | |
|---|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] | |
| 2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3] | |
| | • Note: No change for SSB transmission due to cell DTX/DRX. |
| | • Note: The impact to IDLE/INACTIVE UEs due to the above enhancement should be avoided. |
| 3. Specify the following techniques in spatial and power domains | |
| | • Specify necessary enhancements on CSI and beam management related procedures including measurement and report, and signaling to enable efficient adaptation of spatial elements (e.g. antenna ports, active transceiver chains) [RAN1, RAN2] |
| | • Specify necessary enhancements on CSI related procedures including measurement and report, and signaling to enable efficient adaptation of power offset values between PDSCH and CSI-RS [RAN1, RAN2] |
| | • Note: Above objectives are only for UE specific channels/signals |
| | • Note: Legacy UE CSI/CSI-RS capabilities applies when considering total number of CSI reports and requirements |
| 4. Specify mechanism(s) to prevent legacy UEs camping on cells adopting the Rel-18 NES techniques, if necessary [RAN2] | |
| 5. Specify CHO procedure enhancement(s) in case source/target cell is in NES mode [RAN2] | |
| 6. Specify inter-node beam activation and enhancements on restricting paging in a limited area [RAN3]. | |
| 7. Specify the corresponding RRM/RF core requirements, if necessary, for the above features [RAN4] | |

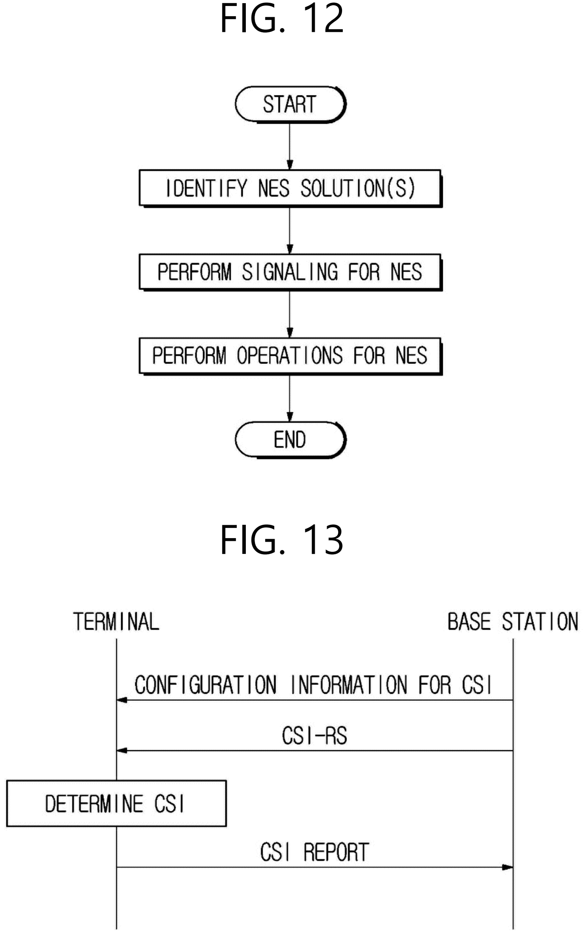

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmissionreception points (TRPs), etc. in a spatial domain. FIG. 12 illustrates an example of an operation procedure of a base station supporting an NES technology. Referring to FIG. 12, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal. Through a procedure such as that of FIG. 12, the NES technology may be performed. Examples of NES solutions that may be performed through a procedure such as that of FIG. 12 are as follows.
- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

### CSI Measurement and Reporting

FIG. 13 illustrates an example of a procedure for CSI measurement and reporting.

Referring to FIG. 13, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

### Detailed embodiments of the present disclosure

The present disclosure relates to a technology for reporting CSI based on sub-configurations for CSI reporting in a wireless communication system. In particular, the present disclosure is related to a technology for controlling and/or signaling states (e.g., activation and/or deactivation) of a plurality of sub-configurations, and proposes various embodiments for transmitting CSIs for the sub-configurations. Hereinafter, in the present disclosure, '/' means 'and', 'or', or 'and/or', depending on the context.

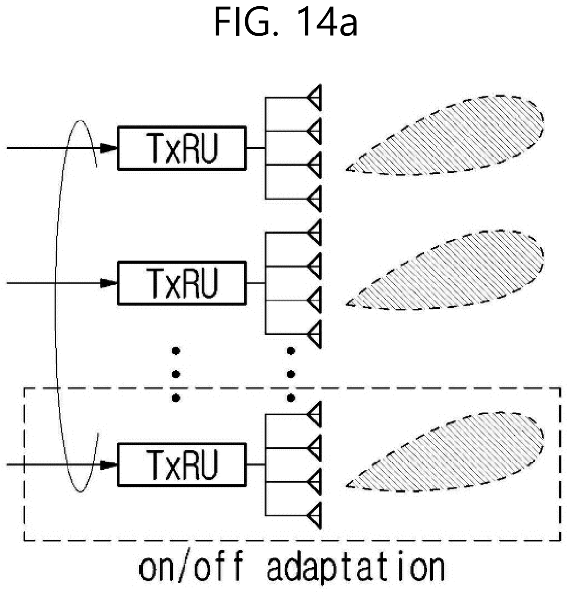

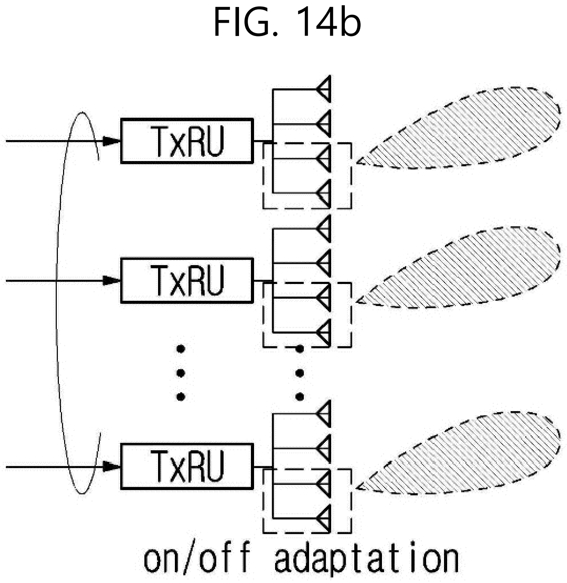

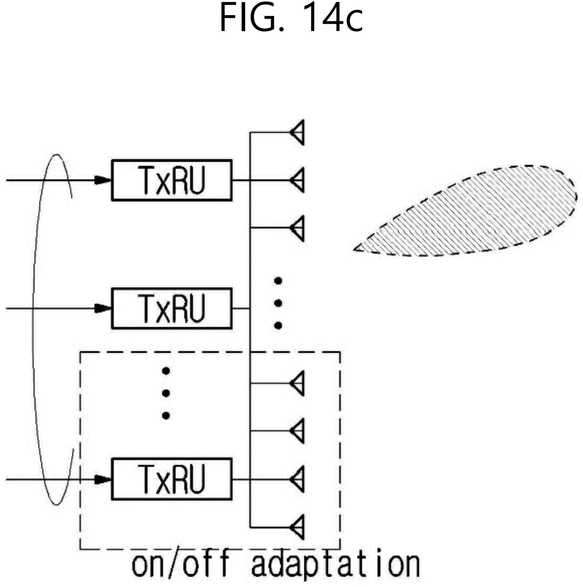

The base station may operate technologies such as controlling on/off of a UE for a certain duration on a time axis for NES purposes, adjusting transmission and reception resources for UE-common or UE-specific signals/channels, changing an amount of frequency domain resources, adjusting transmission power, or turning on/off antenna ports (APs), transmission reception points (TRPs), etc., in a spatial domain. In the present disclosure, the listed technologies are referred to as 'NES technology' or 'NES_tech', and a state in which at least one of the NES_techs is applied is referred to as an 'NES mode' or 'NES state'. For example, examples of state control of antenna elements according to an NES mode are as shown in FIG. 14a to FIG. 14c. Referring to FIG. 14a to FIG. 14c, energy saving may be achieved by adaptively turning on/off some antenna elements among a plurality of antenna elements connected to a plurality of transmit radio units (TxRUs). The base station may indicate to the UE which NES_tech(s) are applied for each NES_tech or NES_tech group [Approach 1], or may pre-configure NES_tech or NES_tech group(s) corresponding to each code point of a specific indicator [Approach 2]. Here, the specific indicator may be indicated through DCI or MAC CE, or may be configured through higher layer signaling.

In the case of Approach 1, when at least one NES_tech is applied to the UE, the corresponding state may be defined as an NES mode or an NES state, and furthermore, may be treated as different NES modes or different NES states depending on which NES_tech is applied. The NES mode or NES state may be used as a concept indicating whether at least one NES technology is applied, or in addition, indicating which NES technology(ies) are applied. When the NES mode or NES state further indicates which NES technology(ies) are applied, different NES modes or different NES states may include different combinations of NES _techs. In the case of Approach 2, for example, when a 1-bit indicator is used, '0' may indicate that the corresponding NES_tech is not applied, and '1' may indicate that at least one NES_tech is applied. In this case, when '1' is indicated through the indicator, the corresponding state may be defined as an NES mode or an NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code point other than '00' is indicated through the indicator, the corresponding state may be defined as an NES mode or an NES state. Furthermore, the UE may determine NES state #1 when '01' is detected, NES state #2 when '10' is detected, and NES state #3 when '11' is detected. Accordingly, it may be distinguished, for each code point, whether the state is an NES state and/or which NES state it is.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

A single CSI report configuration (e.g., CSI-ReportConfig) may include a plurality of sub-configurations based on different numbers of antenna ports or different values of power offset. Specifically, for one CSI report configuration, CSI-RS resources or CSI-RS resource sets having different numbers of APs may be associated, or multiple power offsets may be associated. Here, the power offset includes the powerControlOffset parameter, which is the power offset value between PDSCH and CSI-RS, or the powerControlOffsetSS parameter, which is the power offset value between SSS and CSI-RS. In this case, at least one of the following CSI frameworks may be introduced.
- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.
- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.
- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.
- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.
- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.
- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration. When applying Framework #3, when CSI-RS index #n1 belonging to a resource set is configured with the number of A1 APs (or a P1/P2 power value), sub-configuration index #s1 is associated with the number of A1 APs (or the P1 power value), and sub-configuration index #s2 is associated with the number of A2 APs less than the number of A1 APs (or the P2 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value, thereby allowing power domain adaptation patterns to be configured differently for each sub-configuration.

By utilizing one of the options #1/2/3 described above, the UE may feedback to the base station a CSI reporting including CSI(s) corresponding to N sub-configurations, where N is between 1 and L among the L sub-configurations.

The present disclosure proposes a technique for indicating N sub-configuration(s) among L sub-configurations.

[Embodiement#1] A method for indicating N sub-configurations through a MAC-CE when activating/deactivating semi-persistent (SP) CSI reporting on a physical uplink control channel (PUCCH).

[Table 5] below shows items related to SP-CSI reporting excerpted from the specification document TS 38.214.

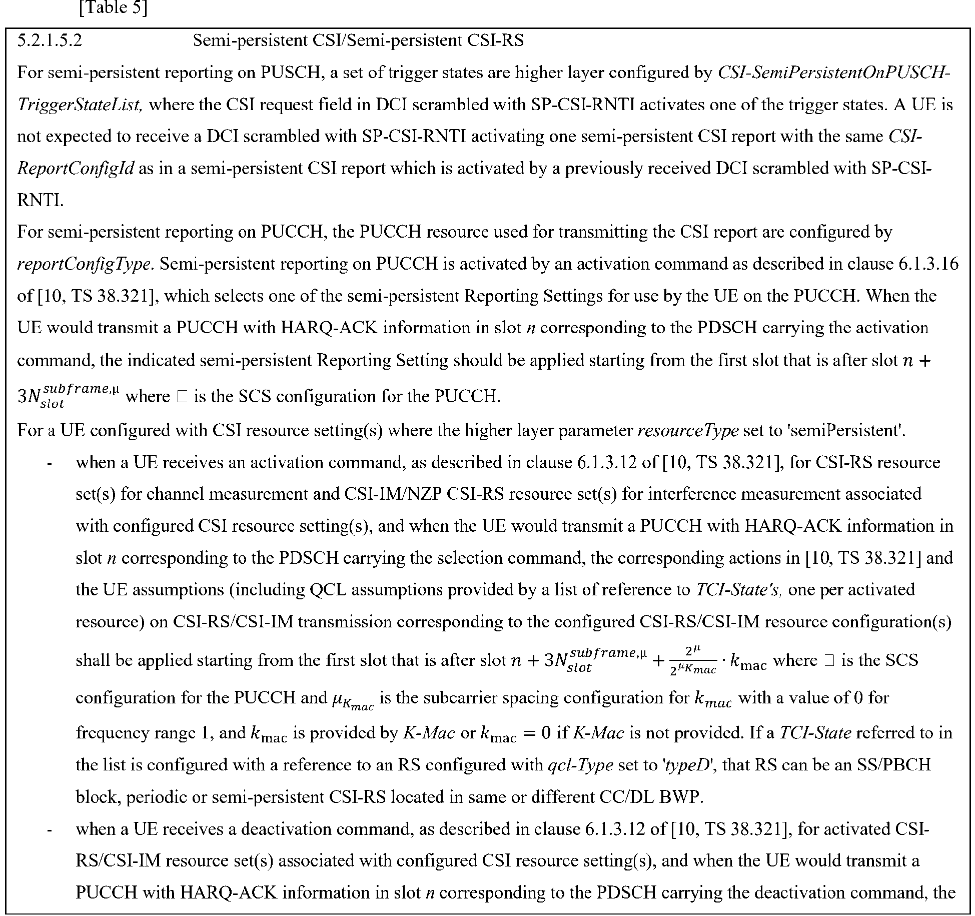

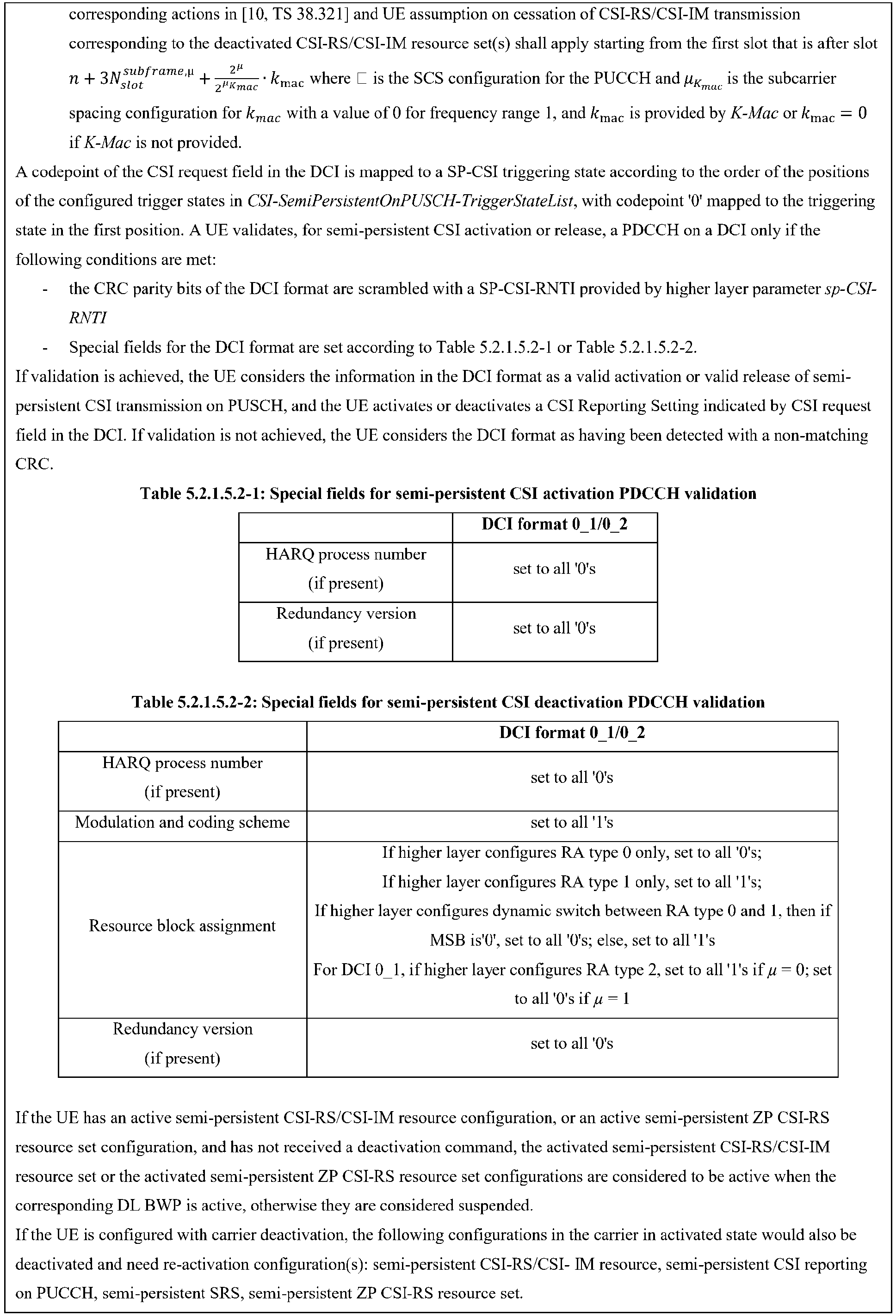

[Table 6] below shows items related to the MAC CE for activating/deactivating SP-CSI, excerpted from the specification document TS 38.321.

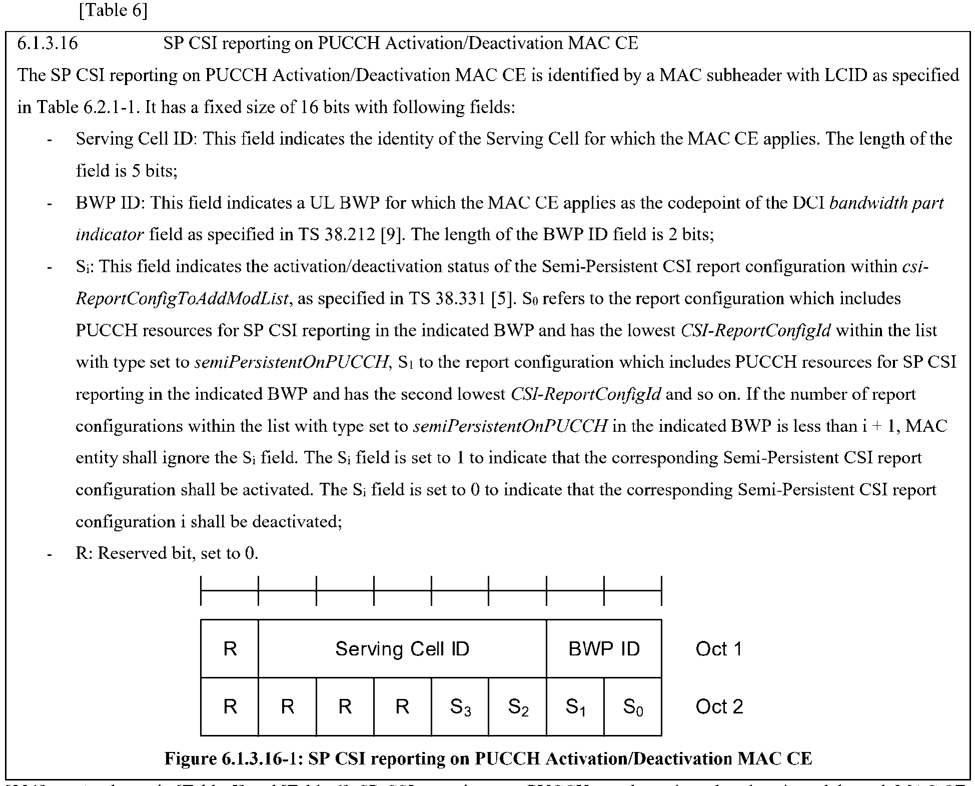

As shown in [Table 5] and [Table 6], SP-CSI reporting on a PUCCH may be activated or deactivated through MAC CE, and the corresponding MAC CE may be defined as shown in [Table 5].

However, since only an index of configuration information (e.g., CSI-ReportConfig) for CSI reporting can be signaled through the current MAC CE, signaling is supported only for activation or deactivation per CSI report configuration. Since L sub-configurations may be configured within one CSI report configuration, it is required to trigger/indicate/activate SP-CSI reporting on the PUCCH for N sub-configuration(s) among the L sub-configurations. To this end, it is necessary to enhance the corresponding MAC CE or to design new MAC CE signaling, and the present disclosure proposes MAC CE signaling technique for this purpose.

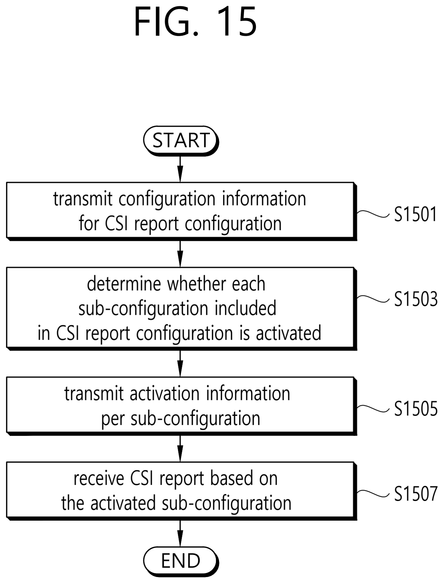

FIG. 15 illustrates an example of a procedure for indicating activation per sub-configuration of a CSI report configuration according to an embodiment of the present disclosure. FIG. 15 exemplifies a method performed by a base station.

Referring to FIG. 15, in step S1501, the base station transmits configuration information for at least one CSI report configuration. The configuration information may include information related to a CSI-RS resource or resource set, the number of antenna ports (APs), a power offset, and a type of CSI report. In addition, the configuration information may include a plurality of sub-configurations, and the sub-configurations may be related to at least one of values of different number of APs, AP subsets, or power offset values. That is, the configuration information, as information for configuring sub-configurations, may include at least one of information indicating an AP subset (e.g., a bitmap), information indicating at least one CSI-RS resource (e.g., an ID list of CSI-RS resource(s)), and information indicating a power offset value (e.g., an offset value). Here, the configuration information may be transmitted to configure a plurality of CSI report configurations.

In step S1503, the base station determines whether each sub-configuration included in the CSI report configuration is activated. That is, the sub-configurations included in the CSI report configuration may be individually activated or deactivated. The base station may determine whether each sub-configuration is activated based on various factor(s). For example, the base station may determine activation and/or deactivation of some sub-configurations based on antenna ports (APs) in an on state. Specifically, when some of the APs of the base station are turned off, the base station cannot transmit CSI-RS using all APs, and therefore may deactivate sub-configuration(s) related to all APs and activate sub-configuration(s) related to the number of APs equal to or less than the number of APs that are on.

In step S1505, the base station transmits information related to activation per sub-configuration. In other words, the base station transmits a message including information related to activation and/or deactivation per sub-configuration (hereinafter referred to as 'sub-configuration activation information'). Depending on various embodiments, the sub-configuration activation information may be transmitted through DCI, MAC CE, or RRC message. In one embodiment, the sub-configuration activation information may have a bitmap format. Specifically, the sub-configuration activation information may include bitmaps for sub-configurations of a plurality of CSI report configurations. When a plurality of CSI report configurations are configured, the sub-configuration activation information may include bitmaps per CSI report configuration (e.g., a first bitmap for a first CSI report configuration, a second bitmap for a second CSI report configuration, etc.), and each bitmap may include one bit per sub-configuration (e.g., a first bit for a first sub-configuration, a second bit for a second sub-configuration). In one embodiment, the sub-configuration activation information may be defined in a format added to MAC CE for PUCCH activation/deactivation indicating activation per CSI report configuration. In this case, the message including the sub-configuration activation information may further include information indicating that the message includes the sub-configuration activation information (e.g., an extended logical channel identifier (eLCID) of a MAC subheader configured to a specific value).

In step S1507, the base station receives a CSI report based on at least one activated sub-configuration. In other words, the base station receives a CSI report including CSI(s) according to the sub-configuration. Here, the CSI report may include CSI(s) per sub-configuration. In other words, the base station receives CSI(s) per sub-configuration from the UE. In this case, the CSI(s) included in the CSI report correspond to at least one sub-configuration indicated as activated in step S1505.

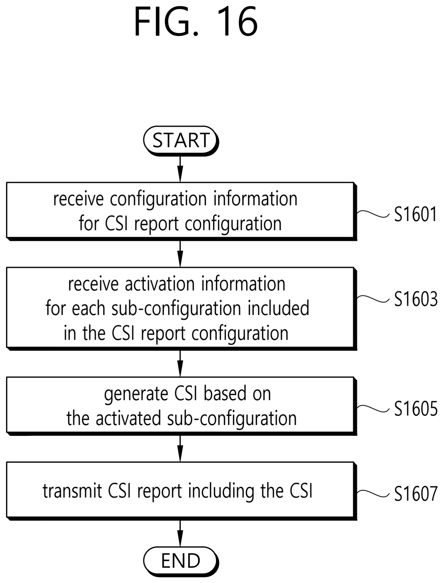

FIG. 16 illustrates an example of a procedure for checking activation per sub-configuration of a CSI report configuration according to an embodiment of the present disclosure. FIG. 16 exemplifies a method performed by a UE.

Referring to FIG. 16, in step S1601, the UE receives configuration information for at least one CSI report configuration. The configuration information may include information related to a CSI-RS resource or resource set, the number of antenna ports (APs), a power offset, and a type of CSI report. In addition, the configuration information may include a plurality of sub-configurations, and the sub-configurations may be related to at least one of values of different number of APs, AP subsets, or power offset values. That is, the configuration information, as information for configuring sub-configurations, may include at least one of information indicating an AP subset (e.g., a bitmap), information indicating at least one CSI-RS resource (e.g., an ID list of CSI-RS resource(s)), and information indicating a power offset value (e.g., an offset value). Here, the configuration information may be received to configure a plurality of CSI report configurations.

In step S1603, the UE receives information related to activation per sub-configuration. In other words, the UE receives a message including information related to activation and/or deactivation per sub-configuration (hereinafter referred to as 'sub-configuration activation information'). Depending on various embodiments, the sub-configuration activation information may be received through DCI, MAC CE, or RRC message. In one embodiment, the sub-configuration activation information may have a bitmap format. Specifically, the sub-configuration activation information may include bitmaps for sub-configurations of a plurality of CSI report configurations. When a plurality of CSI report configurations are configured, the sub-configuration activation information may include bitmaps per CSI report configuration (e.g., a first bitmap for a first CSI report configuration, a second bitmap for a second CSI report configuration, etc.), and each bitmap may include one bit per sub-configuration (e.g., a first bit for a first sub-configuration, a second bit for a second sub-configuration). In one embodiment, the sub-configuration activation information may be defined in a format added to MAC CE for PUCCH activation/deactivation for indicating activation per CSI report configuration. In this case, the message including the sub-configuration activation information may further include information indicating that the message includes the sub-configuration activation information (e.g., an eLCID of a MAC subheader configured to a specific value).

In step S1605, the UE generates CSI(s) based on at least one activated sub-configuration. In other words, the UE generates CSI(s) for at least one sub-configuration. Here, the CSI may include at least one of a CRI, an RI, and a CQI. To this end, the UE may perform measurement for CSI-RS. That is, although not shown in FIG. 16, the UE may receive at least one CSI-RS and then generate CSI(s) for each of at least one sub-configuration based on a measurement result for the CSI-RS.

In step S1607, the UE transmits a CSI report including CSI(s). In other words, the UE transmits a CSI report including CSI(s) according to the sub-configuration. Here, the CSI report may include CSI(s) per sub-configuration. In this case, the CSI(s) included in the CSI report correspond to at least one sub-configuration indicated as activated in step S1603.

As illustrated in the embodiments described with reference to FIG. 15 and FIG. 16, the base station and the UE may perform signaling for activation per sub-configuration of a CSI report configuration. The signaling format for indicating activation and/or deactivation per sub-configuration may be defined in various ways. Hereinafter, the present disclosure describes various embodiments of signaling for indicating activation and/or deactivation per sub-configuration. In the following description, a bitmap is defined as a set of bits configured as values representing the state of each indicated target, and generally, each bit and target may be defined to have a one-to-one relationship. Each bit configuring the bitmap may be referred to as a 'field'. Accordingly, the bitmap may be referred to as a set of fields or a set of bits.

[Embodiment #1-1] Activation for N sub-configurations among two or more L sub-configurations within an index of configuration (e.g., CSI-ReportConfig) related to a CSI report may be indicated through one common field composed of one or more bits.

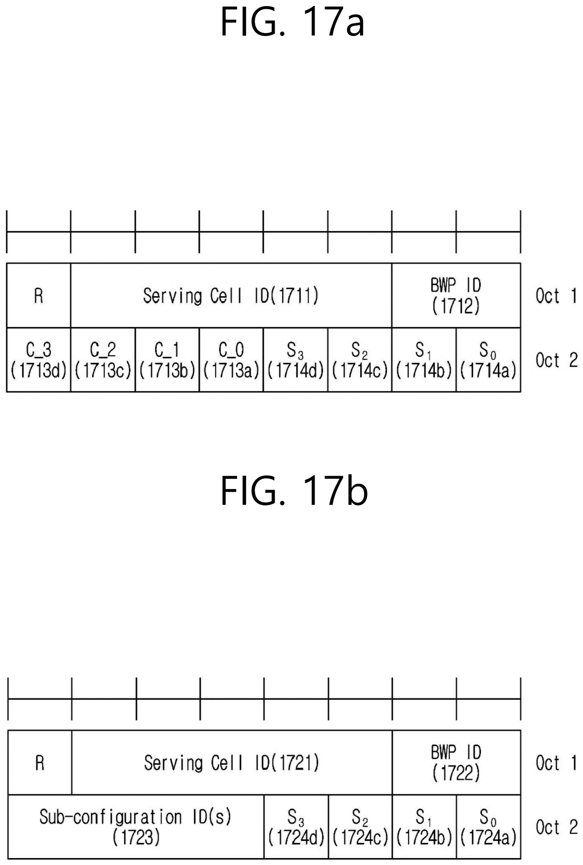

According to one embodiment, as shown in FIG. 17a, through a 4-bit bitmap, index value(s) of sub-configuration(s) to be activated, among sub-configurations configured to a maximum of four, may be commonly represented. FIG. 17a illustrates a first example of a structure of MAC CE for controlling CSI reporting according to an embodiment of the present disclosure. Referring to FIG. 17a, the MAC CE includes two octets and includes at least one of a serving cell ID 1711, a BWP ID 1712, a first field set 1713a to 1713d including {C_3, C_2, C_1, C_0} for indicating activation per sub-configuration, and a second field set 1714a to 1714d including {S_3, S_2, S_1, S_0} for indicating activation per CSI report configuration. The sub-configuration indexes may be mapped in ascending order from C_0 or the sub-configuration indexes may be mapped in ascending order from C_3. For example, when '{S_3, S_2, S_1, S_0} = 0111' is signaled, identifiers (e.g., CSI-ReportConfigID) for CSI report configurations corresponding to S_2, S_1, and S_0, respectively, may be activated. In the present disclosure, activation of a specific CSI-ReportConfigID may be understood as activation of the CSI report identified by the CSI-ReportConfigID. In addition, in the present disclosure, activation of a specific sub-configuration index may be understood as activation of the sub-configuration of the CSI report identified by the sub-configuration index.

For example, assuming that for each of CSI-ReportConfigIDs corresponding to S_2, S_1, and S_0, L = 4, 2, and 1, that is, four, two, and one sub-configuration(s) are configured, the MAC CE may be interpreted as follows. Here, L = 1 may indicate, as in the existing case, that no sub-configuration is configured, or may indicate that only one sub-configuration is configured. When sub-configuration indexes are mapped in ascending order from C_0 and '{C_3, C_2, C_1, C_0} = 0110' is signaled, for the CSI-ReportConfigID corresponding to S_2, sub-configuration indexes #1/#2 may be activated. In addition, for the CSI-ReportConfigID corresponding to S_1, since sub-configuration index #2 is not configured, sub-configuration index #1 may be activated. Furthermore, for the CSI-ReportConfigID corresponding to S_0, because the configuration is the same as the existing case, the signaling for {C_3, C_2, C_1, C_0} may be ignored, and the corresponding CSI report configuration may be activated.

In the present disclosure, activation of sub-configuration index #n of a specific CSI-ReportConfigID may mean that the UE calculates CSI based on the number of APs and/or the CSI-RS power value configured for the corresponding sub-configuration index, and feeds back to the base station a CSI report including the calculated CSI. In this embodiment, although the maximum value of L is exemplified as 4, when the maximum value of L (= M) is defined as a value smaller than 4, the field may be defined using only M MSBs or LSBs among {C_3, C_2, C_1, C_01, and this embodiment may be applied.

According to another embodiment, a combination of sub-configuration indexes may be commonly indicated using other means instead of bitmap information. In this case, the first field set 1713a to 1713d of FIG. 17a may be configured as one of a plurality (e.g., K) of available code points instead of a bitmap. Specifically, combinations of sub-configuration indexes corresponding to K code points may be pre-configured or predefined, and sub-configuration index(es) may be signaled through ceiling{log2(K)} bit(s). For example, a mapping relationship may be pre-configured or predefined such that code point #0 corresponds to sub-configuration index #0, code point #1 corresponds to sub-configuration index #1, code point #2 corresponds to sub-configuration index #2, code point #3 corresponds to sub-configuration index #3, code point #4 corresponds to sub-configuration indexes #0/1, code point #5 corresponds to sub-configuration indexes #2/3, and code point #6 corresponds to sub-configuration indexes #0/1/2/3. In this case, sub-configuration index(es) to be activated may be commonly indicated for CSI-ReportConfigID(s) to be activated through one field composed of three bits (= ceiling{log2(7)}).

FIG. 17a illustrates the size of the first field set 1713a to 1713d as 4 bits, but if only P bits, which are less than 4, are required, the field may be composed of only P MSB(s) or LSM(s) among the 4 bits. For example, when '{S_3, S_2, S_1, S_0} = 0111' is signaled, the CSI-ReportConfigIDs corresponding to S_2, S_1, and S_0, respectively, may be activated. In this case, assuming that for the CSI-ReportConfigIDs corresponding to S_2, S_1, and S_0, respectively, L = 4, 2, and 1, that is, four, two, and one sub-configuration(s) are configured, when code point #6 is signaled through the proposed field, sub-configuration indexes #0/1/2/3 may be activated for the CSI-ReportConfigID corresponding to S_2. In addition, for the CSI-ReportConfigID corresponding to S_1, since sub-configuration indexes #2/3 are not configured, sub-configuration indexes #0/1 may be activated. Furthermore, since the CSI-ReportConfigID corresponding to S_0 is the same as the existing configuration, signaling through the proposed field may be ignored, and the corresponding CSI report configuration may be activated.

According to another embodiment, sub-configuration ID(s) may be used instead of a bitmap or code point. FIG. 17b illustrates a second example of a structure of MAC CE for controlling CSI reporting according to an embodiment of the present disclosure. Referring to FIG. 17b, the MAC CE includes two octets and includes at least one of a serving cell ID 1721, a BWP ID 1722, a first field 1723 indicating sub-configuration ID(s), and a second field set 1724a to 1724d including {S_3, S_2, S_1, S_0} for indicating activation per CSI report configuration. Referring to FIG. 17b, when a specific index value is indicated through the first field 1723, i.e., the sub-configuration ID(s) field, all sub-configuration(s) having index values equal to or greater than the indicated index may be activated. For example, when '{S_3, S_2, S_1, S_0} = 0111' is signaled and a value of 1 is signaled through the proposed field, sub-configuration(s) having index values equal to or greater than 1 among those configured for CSI-ReportConfigIDs corresponding to S_2, S_1, and S_0 may be activated. Assuming that for the CSI-ReportConfigIDs corresponding to S_2, S_1, and S_0, respectively, L = 4, 2, and 1, that is, four, two, and one sub-configuration(s) are configured, since the CSI-ReportConfigID corresponding to S_0 is the same as the existing configuration, signaling through the proposed field may be ignored, and the corresponding CSI report configuration may be activated. Here, although it is described that sub-configuration(s) having index values equal to or greater than the indicated value are activated, in other embodiments, sub-configuration(s) having index values greater than, less than, or equal to the indicated value may be activated.

According to another embodiment, based on an index value indicated through the first field 1723, i.e., the sub-configuration ID(s) field, all sub-configurations may be activated, or only one sub-configuration identified by the indicated index value may be activated. Specifically, when a specific index value (e.g., the largest index value or the smallest index value) is indicated, all sub-configurations may be activated, and when another index value is indicated, only the sub-configuration corresponding to the indicated index value may be activated. For example, when '{S_3, S_2, S_1, S_0} = 0111' is signaled and a value of 1 is signaled through the proposed field, the sub-configuration having an index value of 1 among those configured for CSI-ReportConfigIDs corresponding to S_2, S_1, and S_0 may be activated. In another example, when '{S_3, S_2, S_1, S_0} = 0111' is signaled and a value of 0 is signaled through the proposed field, all sub-configurations configured for CSI-ReportConfigIDs corresponding to S_2, S_1, and S_0 may be activated. Assuming that for the CSI-ReportConfigIDs corresponding to S_2, S_1, and S_0, respectively, L = 4, 2, and 1, that is, four, two, and one sub-configuration(s) are configured, since the CSI-ReportConfigID corresponding to S_0 is the same as the existing configuration, signaling through the proposed field may be ignored, and the corresponding CSI report configuration may be activated.

The MAC CE according to the present embodiment may be configured with the same number of bits as the existing MAC CE. Accordingly, it is necessary to distinguish between the proposed MAC CE and the existing MAC CE. Alt1) A reserved (R) bit located before the serving cell ID may be used. For example, when the value of the bit is a first value (e.g., 0 or 1), the MAC CE may be the existing MAC CE, whereas when the value of the bit is a second value (e.g., 1 or 0), the MAC CE may be the proposed MAC CE. Alt2) When the serving cell and the BWP indicated by the MAC CE operate in the NES mode (e.g., when L sub-configurations greater than 1 are configured for at least one CSI report configuration), the MAC CE may have the structure of the proposed MAC CE. In contrast, when the serving cell and the BWP indicated by the MAC CE do not operate in the NES mode, the MAC CE may have the structure of the existing MAC CE. Alt3) A new MAC CE different from the existing one may be defined. That is, it may be signaled through MAC subheader information (e.g., LCID or eLCID) that the MAC CE is a newly proposed structure. That is, the base station may configure the LCID or eLCID in the MAC subheader to a value corresponding to the newly proposed structure of the MAC CE.

In the embodiments described above, since only one of N sub-configuration indexes is signaled, when a plurality of CSI report configurations are activated, individual information for each CSI report configuration may not permitted to be provided, and only common information may be provided. As one solution to this issue, a restriction may be applied such that the number of CSI-ReportConfigIDs activated through the MAC CE is limited to a maximum of one. Alternatively, among CSI report configurations including L sub-configurations where L is greater than 1, a restriction may be applied such that the number of CSI-ReportConfigIDs activated through the proposed MAC CE is limited to a maximum of one. For example, when a total of four CSI report configurations are configured for SP-CSI reporting on a PUCCH, and three of the CSI report configurations have L sub-configurations greater than 1 while the remaining one CSI report configuration has no sub-configuration configured, in activation using the proposed MAC CE, a restriction may be applied such that a maximum of one among the three CSI report configurations is activated.

[Embodiment #1-2] This embodiment is intended to resolve the configuration limitation described in [Embodiment #1-1]. According to [Embodiment #1-2], N sub-configuration index(es) may be configured per CSI report configuration within the MAC CE.

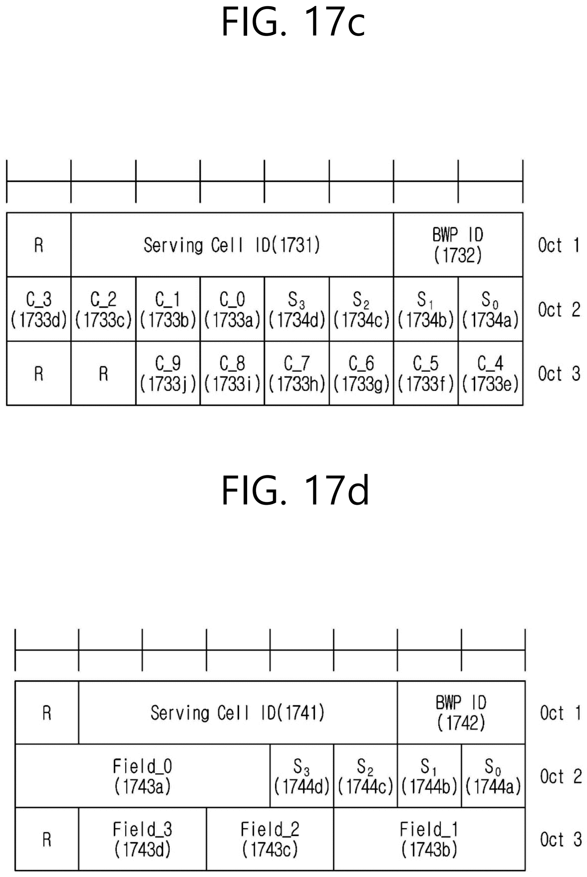

FIG. 17c illustrates a third example of a structure of MAC CE for controlling CSI reporting according to an embodiment of the present disclosure. Referring to FIG. 17c, the MAC CE includes three octets and includes at least one of a serving cell ID 1731, a BWP ID 1732, a first field set 1733a to 1733j for indicating activation per sub-configuration including {C_9, C_8, C_7, C_6, C_5, C_4, C_3, C 2, C_1, C_0}, and a second field set 1734a to 1734d for indicating activation per CSI report configuration including {S_3, S_2, S_1, S_0}. Referring to FIG. 17c, through X-bit bitmap included in the first field set 1733a to 1733j, index value(s) of sub-configuration(s) to be activated for each of up to four configured sub-configurations may be represented. Here, X may be the same or different for each sub-configuration. The bitmap size may vary depending on the total number of sub-configurations of CSI report configurations corresponding to S_3, S_2, S_1, and S_0, respectively, or a fixed bitmap size of 4×Y-bits may be allocated considering a maximum of Y sub-configurations for each CSI report configuration. For example, when the bitmap size may vary depending on the total number of sub-configurations of CSI report configurations corresponding to S_3, S_2, S_1, and S_0, respectively, if the numbers of sub-configurations corresponding to S_3, S_2, S_1, and S_0 are 4, 2, 2, and 2, respectively, X may be 10, and remaining bits that do not fit an octet size may be configured as reserved bits. When '{S_3, S_2, S_1, S_0} = 1110' is signaled, CSI-ReportConfigIDs corresponding to S_3, S_2, and S_1, respectively, may be activated. In this case, through bitmaps {C_9, C_8, C_7, C_6}, {C_5, C_4}, and {C_3, C_2} corresponding to S_3, S_2, and S_1, respectively, information indicating which sub-configuration index is activated may be transferred. If sub-configuration indexes are mapped in ascending order from C_0 and '{C_9, C_8, C_7, C_6} = 1110' is signaled, for the CSI-ReportConfigID corresponding to S_3, sub-configuration indexes #1/2/3 may be activated. That is, a UE receiving '{C_9, C_8, C_7, C_6} = 1110' may recognize that sub-configuration indexes #1/2/3 related to the CSI-ReportConfigID corresponding to S_3 are activated.

Meanwhile, for any CSI-ReportConfigID among the CSI-ReportConfigIDs corresponding to S_3, S_2, S_1, and S_0, respectively, when no sub-configuration is configured or only one sub-configuration is configured for a certain CSI-ReportConfigID, the bitmap size corresponding to the CSI-ReportConfigID may be 0 or a fixed size of Y-bits. Even when a bitmap of a fixed size of Y-bits is allocated, the UE may ignore the corresponding Y-bit information. In other words, based on the number of sub-configurations included in the corresponding CSI report configuration, at least a part of the Y bits for indicating whether the sub-configurations of the CSI report configuration are activated may be ignored. Furthermore, when a bitmap of Y-bits is allocated but the number of sub-configurations included in the corresponding CSI report configuration is x, which is smaller than Y, bits other than the x bits among the Y bits may be ignored. That is, when the number of configured sub-configurations is less than x+1, the UE may use bits of indexes 0 to x-1 in the Y-bit bitmap for the sub-configurations of the corresponding CSI report configuration and may ignore the remaining bits.

As described in the embodiments above, a bitmap size fixed to 4×Y bits can be allocated. If, in determining the location of the bitmap for each CSI reporting configuration, a method of determining by assuming that Opt1) the bitmap size corresponding to each configuration is fixed to Y bit(s), or a method of determining by assuming that Opt2) the bitmap size for each CSI reporting configuration is variable depending on the number of sub-configuration(s) included in each CSI reporting configuration may be used. For example, when the numbers of sub-configurations corresponding to CSI report configurations are 4, 2, 2, and 2, and Y = 4, under Opt1), the bit positions allocated to the four sub-configurations corresponding to the highest configuration index may be {C_15, C_14, C_13, C_12}. In contrast, under Opt2), the bit positions allocated to the four sub-configurations corresponding to the highest configuration index may be {C_9, C_8, C_7, C_6}.

According to another embodiment, a combination of sub-configuration indexes may be indicated per CSI report configuration using means other than bitmap information. FIG. 17d illustrates a fourth example of a structure of MAC CE for controlling CSI reporting according to an embodiment of the present disclosure. Referring to FIG. 17d, the MAC CE includes three octets and includes at least one of a serving cell ID 1741, a BWP ID 1742, a first field set 1743a to 1743d for indicating activation of sub-configurations per CSI report configuration, and a second field set 1744a to 1744d for indicating activation per CSI report configuration including {S_3, S_2, S_1, S_0}.

When the first field set 1743a to 1743d for indicating activation of sub-configurations per CSI report configuration, as shown in FIG. 17d, is used, combinations of sub-configuration indexes corresponding to K code points for each CSI report configuration may be pre-configured/defined, and sub-configuration indexes may be signaled through ceiling{log2(K)} bit(s). For example, combinations of sub-configuration indexes for 10 code points may be pre-configured/defined for S_0, combinations of sub-configuration indexes for 5 code points may be pre-configured/defined for S_1, combinations of sub-configuration indexes for 3 code points may be pre-configured/defined for S_2, and combinations of sub-configuration indexes for 4 code points may be preconfigured/defined for S_3. In this case, through a single field (e.g., the first field set 1743a to 1743d) having a total size of 11 bits (= ceiling{log2(10)} + ceiling{log2(5)} + ceiling{log2(3)} + ceiling{log2(4)}), it is possible to individually indicate sub-configuration index(es) to be activated for each CSI-ReportConfigID to be activated.

As shown in FIG. 17d, remaining bits that do not align with an octet unit may be configured as reserved bits. Meanwhile, if no sub-configurations is configured for a certain CSI-ReportConfigID among the CSI-ReportConfigIDs corresponding to S_3, S_2, S_1, and S_0, respectively, that is, when L = 1, the field size corresponding to the CSI-ReportConfigID may be 0.

According to another embodiment, instead of defining separate fields for each CSI report configuration, by using a single field, the combinations of sub-configuration index(es) activated per CSI report configuration may be indicated by information corresponding to the code point of the field. Even when a certain code point is indicated through the single field, if a specific CSI report configuration is deactivated according to the signaling of {S_3, S_2, S_1, S_0}, the indication for sub-configuration(s) corresponding to the deactivated CSI report configuration may be ignored in the information corresponding to the code point. In other words, although the code point included in the first field set 1743a to 1743d indicates whether sub-configurations per CSI report configuration are activated, the activation of sub-configurations included in a deactivated CSI report configuration may be ignored.

Alternatively, when a specific index value is indicated through each field, it may mean that all sub-configurations having index values equal to or greater than the indicated index are activated. For example, when '{S_3, S_2, S_1, S_0} = 0111' is signaled, and values 0, 1, and 0 are signaled through Field_2 1743c, Field_1 1743b, and Field_0 1743a of the first field set 1743a to 1743d, respectively, sub-configurations having index values equal to or greater than 0, 1, and 0 among those configured for CSI-ReportConfigIDs corresponding to S_2, S_1, and S_0 may be activated. Here, although it is described that sub-configurations having index values equal to or greater than the indicated value are activated, in other embodiments, sub-configurations having index values greater than, less than, or equal to the indicated value may be activated. In this case, when a specific CSI-ReportConfigID has no sub-configuration (i.e., L = 1), signaling through the proposed field may be ignored, and the activation state may be determined based on the corresponding S_X.

Alternatively, according to another embodiment, based on an index value indicated through the first field set 1743a to 1743d, all sub-configurations may be activated, or only one sub-configuration identified by the indicated index value may be activated. Specifically, when a specific index value (e.g., the smallest index value or the largest index value) is indicated through each field included in the first field set 1743a to 1743d, all sub-configurations may be activated, and when another index value is indicated, only the sub-configuration corresponding to the indicated index value may be activated. For example, when '{S_3, S_2, S_1, S_0} = 0111' is signaled, and values 0, 1, and 0 are signaled through Field_2 1743c, Field_1 1743b, and Field_0 1743a of the first field set 1743a to 1743d, respectively, all sub-configurations configured for CSI-ReportConfigIDs corresponding to S_2 and S_0 may be activated, and only sub-configuration index #1 among sub-configurations configured for the CSI-ReportConfigID corresponding to S_1 may be activated. When a specific CSI-ReportConfigID has no sub-configuration, that is, L = 1, signaling through the proposed field may be ignored, and the activation state may be determined based on the corresponding S X.

The embodiments described above may be implemented using MAC CE having the same number of bits as the existing MAC CE, depending on the maximum L value or field size. Accordingly, similar to [Embodiment #1-1], it may be necessary to distinguish between the existing MAC CE and the proposed MAC CE. Alt1) A reserved (R) bit located before the serving cell ID may be used. For example, when the value of the bit is a first value (e.g., 0 or 1), the MAC CE may be the existing MAC CE, whereas when the value of the bit is a second value (e.g., 1 or 0), the MAC CE may be the proposed MAC CE. Alt2) When the serving cell and the BWP indicated by the MAC CE operate in the NES mode (e.g., when L sub-configurations greater than 1 are configured for at least one CSI report configuration), the MAC CE may have the structure of the proposed MAC CE. In contrast, when the serving cell and the BWP indicated by the MAC CE do not operate in the NES mode, the MAC CE may have the structure of the existing MAC CE. Alt3) A new MAC CE different from the existing one may be defined. That is, it may be signaled through MAC subheader information (e.g., LCID or eLCID) that the MAC CE is a newly proposed structure. That is, the base station may configure the LCID or eLCID in the MAC subheader to a value corresponding to the newly proposed structure of the MAC CE. In this case, Alt3 may also be applied when the MAC CE proposed in [Embodiment #1-2] has a different size from the existing MAC CE.

[Embodiment #1-3] Since the [Embodiment #1-1] and [Embodiment #1-2] described above are proposed based on the design of the existing MAC CE, signaling for activation at the CSI report configuration level, i.e., indication of activation using {S_3, S_2, S_1, S_0} signaling, additionally includes signaling for activation at the sub-configuration level. In this case, signaling overhead may increase. Therefore, [Embodiment #1-3] proposes a structure that signals only activation at the sub-configuration level, thereby reducing the number of required bits.

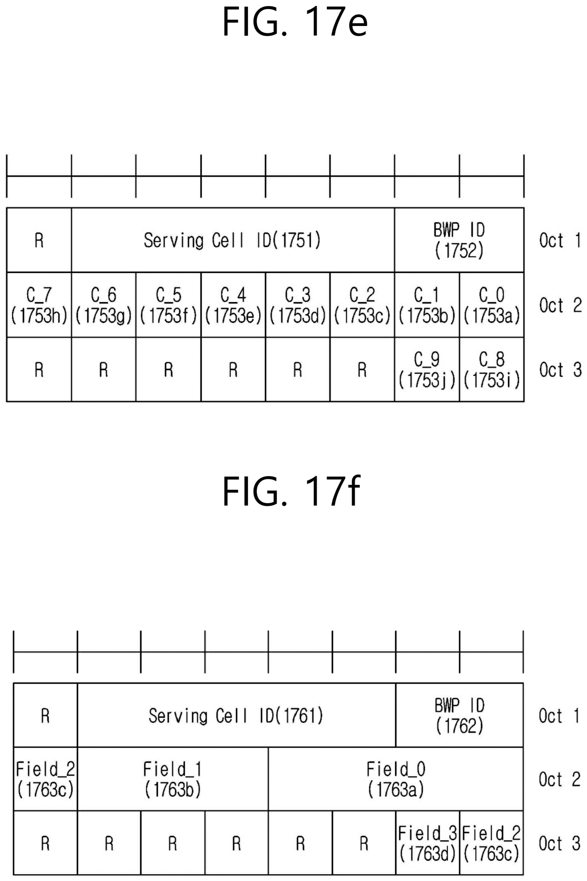

FIG. 17e illustrates a fifth example of a structure of MAC CE for controlling CSI reporting according to an embodiment of the present disclosure. Referring to FIG. 17e, the MAC CE includes three octets and includes at least one of a serving cell ID 1751, a BWP ID 1752, and a field set 1753a to 1753dj for indicating activation of sub-configurations per CSI report configuration.

Referring to FIG. 17e, through X-bit bitmap included in the field set 1753a to 1753dj, index value(s) of sub-configuration(s) to be activated for each of up to four configured sub-configurations may be indicated. The bitmap size may vary depending on the total number of sub-configurations of CSI report configurations for which SP-CSI reporting on a PUCCH is configured, or a fixed bitmap size of 4×Y-bits may be allocated considering a maximum of Y sub-configurations for each CSI report configuration for which SP-CSI reporting on a PUCCH is configured. For example, when the bitmap size varies depending on the total number of sub-configurations of the corresponding CSI report configurations, if the numbers of sub-configurations of the CSI report configurations are 4, 3, 2, and 1, X may be 10, and remaining bits that do not align with an octet size may be configured as reserved bits. Starting from the CSI report configuration having the largest index, which sub-configuration index is activated may be signaled through bitmaps including {C_9, C_8, C_7, C_6}, {C_5, C_4, C_3}, {C_2, C_1}, and {C_0}, respectively. If sub-configuration indexes are mapped in ascending order from C_0 and '{C_9, C_8, C_7, C_6} = 0110' is signaled, sub-configuration indexes #1/2 for the CSI-ReportConfigID corresponding to the largest index may be activated.

For each CSI reporting configuration configured for SP-CSI reporting on the PUCCH, a fixed bitmap size of 4×Y-bit bitmaps may be allocated, considering a maximum of Y sub-configurations. In determining the location of the bitmap for each CSI reporting configuration, a method of determining by assuming that Opt1) the bitmap size corresponding to each CSI reporting configuration is fixed to Y bit(s) or a method of determining by assuming that Opt2) assuming that the bitmap size for each CSI reporting configuration is variable depending on the number of sub-configurations included in each CSI reporting configuration may be used. For example, when the numbers of sub-configurations of CSI report configurations are 4, 3, 2, and 1, and Y = 4, under Opt1), the bit positions allocated to the four sub-configurations corresponding to the highest configuration index may be {C_15, C_14, C_13, C_12}, and under Opt2), the bit positions allocated to the four sub-configurations corresponding to the highest configuration index may be {C_9, C_8, C_7, C_6}.

In this embodiment, when the bitmap corresponding to a specific CSI report configuration is configured to all zeros, the CSI report configuration is deactivated. That is, when the bitmap becomes all zeros, all sub-configurations included in the corresponding CSI report configuration are deactivated, which may be interpreted as deactivation of the CSI report configuration. In this way, whether to activate a CSI reporting configuration level may be signaled by the bit values of the bitmap.

Meanwhile, when no sub-configuration is configured for a certain CSI-ReportConfigID, that is, when L = 1, the bitmap size corresponding to the CSI-ReportConfigID may be 1 bit or a fixed size of Y-bits. If a bitmap of a fixed size of Y-bits is allocated, activation or deactivation may be signaled through 1 bit of the MSB or LSB of the Y-bits, or may be signaled depending on whether all bits are configured to all one or all zero.

According to another embodiment, a combination of sub-configuration indexes may be indicated per CSI report configuration using means other than a bitmap. FIG. 17f illustrates a sixth example of a structure of MAC CE for controlling CSI reporting according to an embodiment of the present disclosure. Referring to FIG. 17f, the MAC CE includes three octets and includes at least one of a serving cell ID 1761, a BWP ID 1762, and a field set 1763a to 1763d for indicating activation of sub-configurations per CSI report configuration. Here, the CSI report configuration may be limited to the CSI report configuration configured for SP-CSI reporting on a PUCCH.

When the field set 1763a to 1763d for indicating activation of sub-configurations per CSI report configuration, as shown in FIG. 17f, is used, combinations of sub-configuration indexes corresponding to K code points for each CSI report configuration may be pre-configured/defined, and sub-configuration indexes may be signaled using ceiling{log2(K)} bit(s). For example, combinations of sub-configuration indexes for 10 code points may be pre-configured/defined for the CSI report configuration having the smallest index, combinations of sub-configuration indexes for 5 code points may be pre-configured/defined for the CSI report configuration having the next higher index, combinations of sub-configuration indexes for 3 code points may be preconfigured/defined for the CSI report configuration having the next higher index, and combinations of sub-configuration indexes for 4 code points may be pre-configured/defined for the CSI report configuration having the next higher index. In this case, through one field composed of a total of 11 bits (= ceiling{log2(10)} + ceiling{log2(5)} + ceiling{log2(3)} + ceiling{log2(4)}), sub-configuration index(es) to be activated may be indicated per CSI-ReportConfigID to be activated. As shown in FIG. 17f, remaining bits that do not align with an octet unit may be configured as reserved bits. According to another embodiment, instead of defining separate fields for each CSI report configuration, a single field may be configured, and one of the combinations of sub-configuration index(es) activated per CSI report configuration may be indicated as information corresponding to the code point of the single field. In this case, the combinations of sub-configuration index(es) may include a combination where N = 0.

According to another embodiment, when a specific index value is indicated through each field, all sub-configurations having index values equal to or greater than the indicated index may be activated. For example, when '{S_3, S_2, S_1, S_0} = 0111' is signaled and values 0, 1, and 0 are signaled through Field_2 1763c, Field_1 1763b, and Field_0 1763a, respectively, all sub-configurations having index values equal to or greater than 0, 1, and 0, configured for CSI-ReportConfigIDs corresponding to S_2, S_1, and S_0, respectively, may be activated. Here, although it is described that sub-configurations having index values equal to or greater than the indicated value are activated, in other embodiments, sub-configurations having index values greater than, less than, or equal to the indicated value may be activated.

According to another embodiment, based on the indicated index value, all sub-configurations may be activated, or only one sub-configuration identified by the indicated index value may be activated. Specifically, when a specific index value (e.g., the largest index value or the smallest index value) is indicated through each field, all configured sub-configurations may be activated, and when another index value is indicated, only the sub-configuration corresponding to the indicated index value may be activated. For example, when '{S_3, S_2, S_1, S_0} = 0111' is signaled and values 0, 1, and 0 are signaled through Field_2 1763c, Field_1 1763b, and Field_0 1763a, all sub-configurations configured for CSI-ReportConfigIDs corresponding to S_2 and S_0 may be activated, and only sub-configuration index #1 among sub-configurations configured for the CSI-ReportConfigID corresponding to S_1 may be activated.

Meanwhile, when no sub-configuration is configured for a certain CSI-ReportConfigID, that is, when L = 1, the field size corresponding to the CSI-ReportConfigID may be 1, and activation or deactivation may be indicated depending on whether 1 or 0 is signaled.

The embodiments described above may be implemented using MAC CE having the same number of bits as the existing MAC CE, depending on the maximum L value or field size. Therefore, similar to [Embodiment #1-1], it may be necessary to distinguish between the existing MAC CE and the proposed MAC CE. Alt1) A reserved (R) bit located before the serving cell ID may be used. For example, when the value of the bit is a first value (e.g., 0 or 1), the MAC CE may be the existing MAC CE, whereas when the value of the bit is a second value (e.g., 1 or 0), the MAC CE may be the proposed MAC CE. Alt2) When the serving cell and the BWP indicated by the MAC CE operate in the NES mode (e.g., when L sub-configurations greater than 1 are configured for at least one CSI report configuration), the MAC CE may have the structure of the proposed MAC CE. In contrast, when the serving cell and the BWP indicated by the MAC CE do not operate in the NES mode, the MAC CE may have the structure of the existing MAC CE. Alt3) A new MAC CE different from the existing one may be defined. That is, it may be signaled through MAC subheader information (e.g., LCID or eLCID) that the MAC CE is a newly proposed structure. That is, the base station may configure the LCID or eLCID in the MAC subheader to a value corresponding to the newly proposed structure of the MAC CE. In this case, Alt3) may also be applied when the MAC CE proposed in [Embodiment #1-2] has a different size from the existing MAC CE.

[Embodiment #2] A scheme for adaptively responding to spatial/power domain adaptation operations of a base station by not performing or deactivating CSI reporting according to sub-configuration #k in another CSI report configuration when sub-configuration #n in a certain CSI report configuration is triggered or activated.

The [Embodiment #2] relates to controlling whether to perform a second sub-configuration belonging to another CSI report configuration based on the activation state of a first sub-configuration belonging to one CSI report configuration. In the following description, not performing AP/SP/P-CSI reporting may be understood as omitting CSI measurement/reporting for the sub-configuration within the corresponding CSI report configuration.

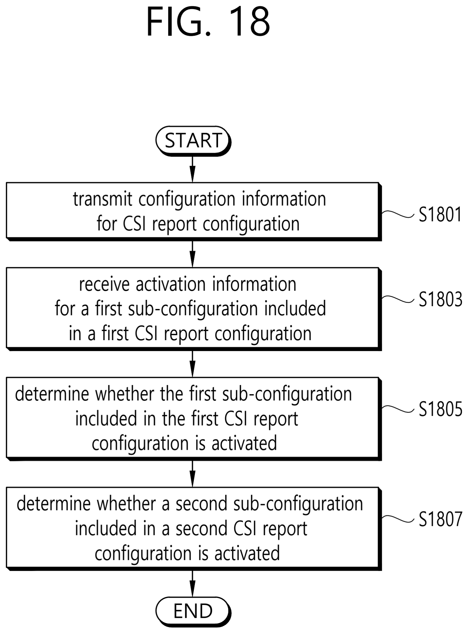

FIG. 18 illustrates an example of a procedure for controlling the state of a sub-configuration based on linkage between sub-configurations according to an embodiment of the present disclosure. FIG. 18 exemplifies a method performed by a UE. In this exemplary procedure, a first sub-configuration included in a first CSI report configuration and a second sub-configuration included in a second CSI report configuration have a linkage relationship.

Referring to FIG. 18, in step S1801, the UE receives configuration information for at least one CSI report configuration. The configuration information may include information related to CSI-RS resources or resource sets, the number of APs, power offset, or the type of CSI reporting. In addition, the configuration information may include a plurality of sub-configurations, and the sub-configurations may relate to at least one of values of different number of APs, AP subsets, or power offset values. That is, the configuration information may include at least one of information indicating an AP subset (e.g., a bitmap) and information indicating a power offset value (e.g., an offset value) as information for configuring sub-configurations. Here, the configuration information may be received to configure a plurality of CSI report configurations including a first CSI sub-configuration and a second CSI sub-configuration. Alternatively, the UE may receive first configuration information for the first CSI sub-configuration and second configuration information for the second CSI sub-configuration through separate messages.

In step S1803, the UE receives activation information for a first sub-configuration included in the first CSI report configuration. In this case, the UE may receive information related to activation per sub-configuration of the first CSI report configuration. That is, the UE may receive activation information for each of a plurality of sub-configurations included in the first CSI report configuration, including the first sub-configuration. According to one embodiment, the activation information for each sub-configuration may be in the form of a bitmap. For example, the first CSI report configuration may be of an AP-CSI report type or an SP-CSI report type.

In step S1805, the UE determines whether the first sub-configuration included in the first CSI report configuration is activated. That is, the UE may determine activation or deactivation of the first sub-configuration based on the activation information received in step S1803.

In step S1807, the UE determines whether the second sub-configuration included in the second CSI report configuration is activated. That is, the UE may determine whether the second sub-configuration having a linkage relationship with the first sub-configuration is activated. In other words, the UE may determine whether the second sub-configuration is activated, based on whether the first sub-configuration is activated and the linkage relationship between the first sub-configuration and second sub-configuration. Here, the linkage relationship may be defined as one of a relationship in which activation of one causes activation of the other, a relationship in which activation of one causes deactivation of the other, a relationship in which deactivation of one causes deactivation of the other, or a relationship in which deactivation of one causes activation of the other, furthermore, the linkage relationship may be defined to have a bidirectional effect or unidirectional effect.

As described with reference to FIG. 18, activation or deactivation of one of the sub-configurations having a linkage relationship may control activation or deactivation of the other. Hereinafter, the present disclosure describes more detailed embodiments of sub-configuration state control based on the linkage relationship.

As shown in [Table 5], SP-CSI reporting may be transmitted through a PUCCH or a PUSCH. In the case of AP-CSI reporting, the UE may feed back values such as CQI, PMI, and RI measured from a CSI-RS corresponding to a code point (e.g., a code point related to a state configured by the CSI-AperiodicTriggerStateList parameter) indicated in the CSI request field within the UL grant scheduling the PUSCH through the scheduled PUSCH. The P-CSI reporting may include values such as CQI, PMI, and RI measured through CSI-RS resources configured in advance by higher-layer signaling, and the UE may feed back the P-CSI report through PUCCH resources configured in advance by higher-layer signaling. In this case, when the PUCCH resources overlap with the PUSCH resources, the UE may feed back the P-CSI report through the PUSCH resources.

In this embodiment, whether CSI reporting according to sub-configuration ID #Y within a P-CSI report configuration is performed may be determined based on whether sub-configuration ID #X within an AP-CSI or SP-CSI report configuration is triggered/activated/indicated through DCI or MAC CE. Considering that P-CSI reporting is configured through RRC signaling, while AP-CSI or SP-CSI reporting may be additionally triggered/activated through DCI/MAC CE signaling, L1/L2 signaling for triggering/activating existing AP-CSI or SP-CSI reporting may be reused without introducing additional L1/L2 signaling for modifying sub-configurations for P-CSI reporting. From this perspective, the present disclosure proposes modification of sub-configurations in P-CSI reporting through signaling for AP/SP-CSI reporting, but it is obvious that the same method may also be applied to the cases described below. In addition, although the present disclosure exemplifies a one-to-one mapping between sub-configurations, the proposed technique may be extended and applied to a one-to-many mapping case.
- determining whether CSI of sub-configuration ID #Y within an AP/SP-CSI report configuration is to be performed, based on triggering of sub-configuration ID #X2 within the AP/SP-CSI report configuration by DCI or MAC CE
- determining whether CSI of sub-configuration ID #Y within a P-CSI report configuration is to be performed, based on triggering of sub-configuration ID #X2 within the P-CSI report configuration by DCI or MAC CE
- determining whether CSI of sub-configuration ID #Y within an AP/SP-CSI report configuration is to be performed, based on triggering of sub-configuration ID #X2 within the P-CSI report configuration by DCI or MAC CE

In this case, sub-configuration ID #X may be indicated, in the case of AP-CSI, through a CSI triggering state corresponding to a specific code point of the CSI request field in a UL grant. Alternatively, sub-configuration ID #X may be indicated, in the case of SP-CSI, through activation DCI or MAC CE. For example, when sub-configuration ID #X1 within an AP/SP-CSI report configuration is triggered/activated by DCI or MAC CE, the UE may not perform CSI reporting according to sub-configuration ID #Y within the P-CSI report configuration. In this case, CSI reporting according to sub-configuration ID #Y within the P-CSI report configuration may be performed again after a certain time period. Here, the certain time period may be referred to as T1, and the value of T1 may be predefined or configured/indicated by higher-layer signaling, MAC CE, or DCI. Alternatively, when sub-configuration ID #X2 within the AP/SP-CSI report configuration is triggered by DCI or MAC CE, the UE may perform CSI reporting according to sub-configuration ID #Y within the P-CSI report configuration. In this case, the linkage between sub-configuration ID #X1 within the AP/SP-CSI report configuration and sub-configuration ID #Y within the P-CSI report configuration, and/or the linkage between sub-configuration ID #X2 within the AP/SP-CSI report configuration and P-CSI reporting ID #Y may be preconfigured.

Alternatively, when the number of antenna ports (APs) related to sub-configuration ID #X1 within the AP-CSI report configuration is N1, and the number of APs related to sub-configuration ID #Y within the P-CSI report configuration is N2, N1 may be equal to or smaller than N2. That is, when AP/SP-CSI reporting corresponding to a smaller number of APs is triggered/activated, the UE may regard that a part of the antenna elements or a part of the APs of the base station are turned off, and may not perform the P-CSI reporting related to a larger number of APs.

In addition, when the number of APs related to sub-configuration ID #X2 within the AP/SP-CSI report configuration is N3, and the number of APs related to sub-configuration ID #Y within the P-CSI report configuration is N2, N3 may be equal to or greater than N2. That is, when AP/SP-CSI reporting corresponding to a larger number of APs is triggered/activated, the UE may consider that more antenna elements or APs of the base station are on, and may additionally perform the P-CSI reporting related to an equal or smaller number of APs.

The embodiments described above may be extended not only to the number of APs but also to the CSI-RS power value. This is because the CSI-RS power value may also change if the number of antenna elements corresponding to the AP changes. Here, the CSI-RS power value may be understood as the sum of the SSS power value, P_s, and the power offset, P_o, between the SSS and the CSI-RS.

Specifically, when the CSI-RS power value related to sub-configuration ID #X1 within the AP-CSI report configuration is P1, and the CSI-RS power value related to sub-configuration ID #Y within the P-CSI report configuration is P2, P1 may be equal to or smaller than P2. That is, when AP/SP-CSI reporting corresponding to a smaller power value is triggered/activated, the UE may consider that some antenna elements or some APs of the base station are off and may not perform the P-CSI reporting related to a larger power value.

In addition, when the CSI-RS power value related to sub-configuration ID #X2 within the AP/SP-CSI report configuration is P3, and the CSI-RS power value related to sub-configuration ID #Y within the P-CSI report configuration is P2, P3 may be equal to or greater than P2. That is, when AP/SP-CSI reporting corresponding to a larger power value is triggered/activated, the UE may consider that more antenna elements or APs of the base station are on and may additionally perform the P-CSI reporting related to an equal or smaller power value.

[Embodiment #3] A scheme for indicating N sub-configuration(s) through DCI or MAC CE for a CSI report configuration including L sub-configurations.

The N sub-configuration(s) may be indicated through a group-common DCI, a group-common MAC CE, MAC CE activating SP-CSI reporting on a PUCCH, a DCI activating SP-CSI reporting on a PUSCH, or a DCI triggering AP-CSI reporting (e.g., a UL grant). Specific embodiments for indicating N sub-configuration(s) are as follows.

To indicate N sub-configuration(s), the MAC CE signaling schemes proposed in the [Embodiment #1] described above may be extended and applied. For example, based on a bitmap-based scheme, an index-indication-based scheme (e.g., a scheme indicating only a specific index and activating one or more sub-configurations by a predefined rule), or a code-point-based scheme (e.g., a scheme pre-configuring/defining combinations of sub-configuration(s) to be activated for each code point and signaling a specific code point), sub-configuration index(es) to be activated may be indicated. The sub-configuration index indication scheme may be signaled individually per CSI report configuration index, or may be commonly signaled for CSI report configuration indexes belonging to a specific group based on pre-configured/defined grouping. Alternatively, sub-configuration index(es) to be activated may be pre-configured per CSI report configuration or per CSI report configuration group for each code point, and by indicating one specific code point, which sub-configuration index(es) are to be activated per CSI report configuration or per CSI report configuration group may be indicated. For example, when configuring a CSI triggering state using RRC signaling, a list of sub-configurations (e.g., csi-ReportSubConfigTriggerList) may be configured using a corresponding parameter (e.g., CSI-AperiodicTriggerState), and by indicating a CSI triggering state related to the list of sub-configurations through the CSI request field in the DCI, N sub-configuration(s) may be indicated.

When a specific sub-configuration index value is indicated through a specific field of DCI or MAC CE, all sub-configurations having index values equal to or greater than the indicated index may be activated. For example, signaling a value of 1 through the field may be interpreted as indicating that all sub-configurations having index values equal to or greater than 1 configured for the CSI-ReportConfigID(s) corresponding to the field indication are activated/triggered/indicated. Here, although it is described that sub-configurations having index values equal to or greater than the indicated value are activated, in other embodiments, sub-configurations having index values greater than, less than, or equal to the indicated value may be activated.

Alternatively, when a specific sub-configuration index value is indicated through a specific field of DCI or MAC CE, it may mean that all sub-configuration index(es) within the same CSI report configuration and/or within different CSI report configurations that are related to the number of APs equal to or smaller than the number of APs corresponding to the indicated sub-configuration index are activated. Alternatively, when a specific sub-configuration index value is indicated through a specific field of DCI or MAC CE, it may mean that all sub-configuration index(es) within the same CSI report configuration and/or within different CSI report configurations that are related to a power offset value equal to or smaller than the power offset value corresponding to the indicated sub-configuration index are activated.

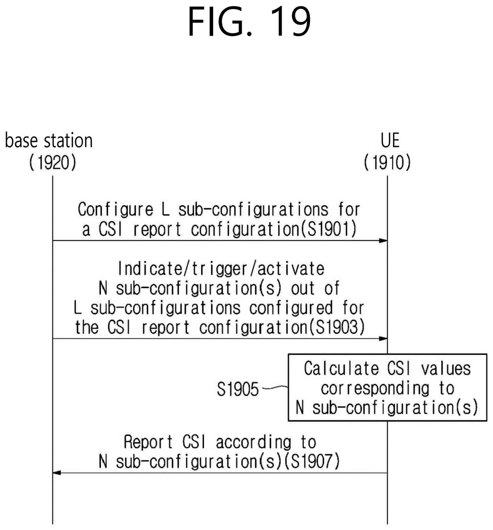

FIG. 19 illustrates an example of a procedure for transmitting CSI reporting based on sub-configurations according to an embodiment of the present disclosure. FIG. 19 exemplifies signal exchanges between a UE 2410 and a base station 2420.

Referring to FIG. 19, in step S1901, the base station 2420 transmits configuration information related to a CSI report configuration including L sub-configurations to the UE 2410. That is, the base station configures L sub-configurations for the CSI report configuration. In other words, when the UE 2410 receives configuration information for one CSI report configuration from the base station 2420, a plurality of sub-configurations may be included within the CSI report configuration. In this case, each sub-configuration may correspond to a spatial/power adaptation pattern.

In step S1903, the base station 2420 transmits information to the UE 2410 for indicating/triggering/activating N sub-configurations among L sub-configurations configured in the CSI report configuration. Even if L sub-configurations are configured, depending on whether antennas are turned on or off or power values are adjusted, CSI information may actually be required for fewer sub-configurations than L. Therefore, the base station 2420 may additionally signal information on N sub-configurations among the L sub-configurations belonging to the CSI report configuration for which the UE 2410 is to actually perform CSI reporting.

In step S1905, the UE 2410 calculates CSI values corresponding to the N sub-configurations. Since only N sub-configurations among the L sub-configurations are activated, the UE 2410 may generate a CSI report according to the remaining sub-configurations excluding the L-N sub-configurations.

In step S1907, the UE 2410 transmits the CSI report according to the N sub-configurations to the base station 2420. In other words, the UE 2410 may report CSI corresponding to the N sub-configurations. Accordingly, instead of generating a CSI report corresponding to all L sub-configurations each time, the UE 2410 generates CSI including only the CSI corresponding to N sub-configurations equal to or fewer than L, thereby providing the advantage of reduced CSI computation complexity and CSI payload size for the UE 2410.

As described in the various embodiments above, depending on whether the base station turns antennas on or off or adjusts power values, the number of plurality of APs or a plurality of power offset values may be related to a single CSI report setting. Specifically, a plurality of sub-configurations may be configured within one CSI report setting, and each sub-configuration may be related to a specific number of APs or a specific power offset value. In this case, by signaling the on/off state of CSI reporting corresponding to a specific sub-configuration according to the antenna number adjustment or power value adjustment of the base station, the CSI reporting overhead of the UE may be reduced.

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

### INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method performed by a user equipment (UE) in a wireless communication system, the method comprising:
receiving configuration information for at least one channel state information (CSI) report including a plurality of sub-configurations;
receiving a message including information related to activation for each of the plurality of sub-configurations;
generating at least one CSI based on at least one sub-configuration which is activated among the plurality of sub-configurations; and
transmitting CSI report including the at least one CSI,
wherein the at least one CSI report configuration includes first CSI report configuration and second CSI report configuration, and
wherein the message includes first field set indicating whether sub-configuration included in the first CSI report configuration is activated, and second field set indicating whether sub-configuration included in the second CSI report configuration is activated.

2. The method of claim 1,
wherein the first field set and the second field set include same number of fields.

3. The method of claim 1,
wherein at least some of fields indicating whether sub-configuration included in the second CSI report configuration is activated are ignored based on a number of sub-configurations included in the second CSI report configuration.

4. The method of claim 1,
wherein the message includes indication information indicating the message including the information related to the activation for each of the plurality of configurations.

5. The method of claim 4,
wherein the indication information is signaled by an extended logical channel identifier (eLCID) included in a media access control (MAC) subheader.

6. The method of claim 1,
wherein the message includes a media access control (MAC) control element (CE) including information related to activation of each of the plurality of sub-configurations, information related to activation of the first CSI report configuration, and information related to activation of the second CSI report configuration.

7. The method of claim 1,
wherein the message includes downlink control information (DCI) including information related to activation of each of the plurality of sub-configurations.

8. A user equipment (UE) in a wireless communication system, comprising:
a transceiver; and
a processor connected to the transceiver,
wherein the processor is configured to:
receive configuration information for at least one channel state information (CSI) report including a plurality of sub-configurations;
receive a message including information related to activation for each of the plurality of sub-configurations;
generate at least one CSI based on at least one sub-configuration which is activated among the plurality of sub-configurations; and
transmit CSI report including the at least one CSI,
wherein the at least one CSI report configuration includes first CSI report configuration and second CSI report configuration, and
wherein the message includes first field set indicating whether sub-configuration included in the first CSI report configuration is activated, and second field set indicating whether sub-configuration included in the second CSI report configuration is activated.

9. A communication device comprising:
at least one processor; and
at least one computer memory connected to the at least one processor and storing instructions that direct operations when executed by the at least one processor, the operations comprising:
receiving configuration information for at least one channel state information (CSI) report including a plurality of sub-configurations;
receiving a message including information related to activation for each of the plurality of sub-configurations;
generating at least one CSI based on at least one sub-configuration which is activated among the plurality of sub-configurations; and
transmitting CSI report including the at least one CSI,
wherein the at least one CSI report configuration includes first CSI report configuration and second CSI report configuration, and
wherein the message includes first field set indicating whether sub-configuration included in the first CSI report configuration is activated, and second field set indicating whether sub-configuration included in the second CSI report configuration is activated.

10. A non-transitory computer-readable medium storing at least one instruction, the at least one instruction being executable by a processor, the at least one instruction causing a device to:
receive configuration information for at least one channel state information (CSI) report including a plurality of sub-configurations;
receive a message including information related to activation for each of the plurality of sub-configurations;
generate at least one CSI based on at least one sub-configuration which is activated among the plurality of sub-configurations; and
transmit CSI report including the at least one CSI,
wherein the at least one CSI report configuration includes first CSI report configuration and second CSI report configuration, and
wherein the message includes first field set indicating whether sub-configuration included in the first CSI report configuration is activated, and second field set indicating whether sub-configuration included in the second CSI report configuration is activated
